# EUROPÄISCHE PATENTSCHRIFT

(11) **EP 3 949 036 B1**
(45) Veröffentlichungstag und Bekanntmachung des Hinweises auf die Patenterteilung: **14.01.2026**
(21) Anmeldenummer: 20717082.0
(22) Anmeldetag: 16.03.2020
(51) Int. Cl.: H01R 43/05, H01R 43/055

(54) **VISUELLE CRIMPÜBERWACHUNG**
VISUAL CRIMP MONITORING
SURVEILLANCE VISUELLE DE SERTISSAGE

(30) Priorität: 26.03.2019 DE 102019107687
(43) Veröffentlichungstag der Anmeldung: 09.02.2022
(73) Patentinhaber: HARTING Electric Stiftung & Co. KG, 32339 Espelkamp (DE)
(72) Erfinder: BRAUN, Marco, 32339 Espelkamp (DE); LOSKE, Felix., 32339 Espelkamp (DE)
(86) Internationale Anmeldenummer: PCT/DE2020/100202
(87) Internationale Veröffentlichungsnummer: WO 2020/192837

(56) Entgegenhaltungen:
- CN-U- 201 741 828
- JP-A- 2008 177 031
- JP-A- H06 241 745
- US-A1- 2012 047 724

## Beschreibung

Die Erfindung betrifft ein Verfahren zur visuellen Crimpüberwachung sowie eine zur Durchführung des Verfahrens geeignete Crimpvorrichtung. Die Erfindung betrifft dabei insbesondere ein Verfahren zur Sicherstellung und/oder Überprüfung der Qualität einer Crimpung sowie eine zur Durchführung des Verfahrens geeignete Vorrichtung.

Beim Crimpen werden mittels einem Formwerkzeug zwei Komponenten unter Einsatz einer Presskraft durch plastisches Verformen miteinander verbunden. Dabei wird eine Crimpung, das heißt eine schwer lösbare mechanische Verbindung zwischen einem Leiter und einem Verbindungselement, wie beispielsweise einem Stecker oder einer Hülse, erzielt.

Beim Herstellen der Crimpung ist für eine dauerhafte mechanisch und elektrisch stabile Verbindung zwischen den vercrimpten Komponenten eine hohe Qualität der Crimpung wünschenswert. Eine Crimpung mit einer mangelhaften Qualität kann insbesondere durch einen fehlerhaften Crimp-Rohling und auch durch Bedienfehler an einer Crimpvorrichtung, wie beispielsweise einer falsch eingestellten Crimphöhe, verursacht sein.

Eine Qualitätssicherung einer Crimpverbindung erfolgt herkömmlich meist durch Vermessen der Crimptiefe, durch eine optische Beurteilung eines Schliffbildes und/oder durch eine Kraft/Weg Überwachung während des Crimpens.

### Stand der Technik

Die WO 2012/110310 A1 schlägt eine vorstehend erwähnte Kraft/Weg Überwachung während des Crimpens vor. Ein Crimp-Rohling wird dabei durch ein Formwerkzeug plastisch verformt. Insbesondere beim Zurückfahren des Formwerkzeugs wird sowohl die Kraft, die das Formwerkzeug auf den Crimp-Rohling ausübt, als auch der Weg, um den sich das Formwerkzeug verlagert, mittels einer Sensorik gemessen. Eine Wegänderung zwischen einer Position bei Maximalkraft und einer erstmals kräftefreien Position wird als Indikator für eine elastische Rückverformung des Crimp-Rohlings verwendet. Dieser Indikator wird als Maß für die Qualität der hergestellten Crimpung vorgeschlagen.

Das von der WO 2012/110310 A1 vorgeschlagene Verfahren ist für eine Ermittlung einer möglichen Ursache für eine Crimpung mit unerwünschter Qualität nicht geeignet.

Aus der JP 2008-177031 A ist eine Crimpvorrichtung bekannt, bei der ein Crimpfehler verhindert wird, der durch Verschiebung eines bogenförmig ausgebildeten und für eine B-Crimpung geeigneten Anschlusses auf einem Amboss verursacht wird. Bei der Crimpung ist ein zu vercrimpender Anschluss auf dem Amboss angeordnet und wird von einem oberhalb des Ambosses angeordneten Stanzteil der Crimpvorrichtung gegen den Amboss gepresst. Die Crimpvorrichtung weist eine Prüfeinrichtung zur Prüfung der korrekten Positionierung des zu vercrimpenden Anschlusses bezüglich dem Amboss und dem Stanzteil auf, wobei ein Bild der Positionierung des Anschlusses geprüft wird.

Aus der US 2012/047724 A1 ist eine Prüfvorrichtung zum Testen des Zustands eines Endabschnitts eines Elektrokabels bekannt, das eine Vielzahl von Kerndrähten und eine Isolierung der Kerndrähte aufweist. Die Prüfvorrichtung weist eine Kamera zur Aufnahme der Endfläche der Kerndrähte auf, die durch Abziehen der Isolierung des Kabels freigelegt wurden. Mittels einer Zähleinheit der Prüfvorrichtung wird die Anzahl der Kerndrähte unter Verwendung eines von der Kamera aufgenommenen Bildes gezählt.

Eine Bestimmungseinheit der Prüfvorrichtung, prüft den Zustand des Endabschnitts des Kabels anhand des Kriteriums, ob die Anzahl der Kerndrähte, die von der Zähleinheit gezählt wird, mit einer vorbestimmten Anzahl übereinstimmt oder nicht.

Aus der CN 201 741 828 U ist eine Crimpvorrichtung für eine Crimpung eines Kabels mit einem Anschluss bekannt. Die Crimpvorrichtung weist eine Fördereinrichtung zur automatisierten kontinuierlichen und positionierten Zuführung einer Vielzahl von Anschlüssen zu einer Stanzpresse der Crimpvorrichtung auf.

Aus der JP H06-241745 A ist eine visuelle Prüfvorrichtung zur Prüfung einer Vielzahl von Werkstücken mit einer Kamera bekannt, wobei eine obere Fläche und eine Seitenfläche eines Werkstücks mit einer Kamera geprüft werden. Die Prüfvorrichtung weist drei Beleuchtungssysteme auf, um jeweils die obere Fläche, die Endfläche und die Seitenfläche eines Werkstücks zu beleuchten. Die Oberseite und die Seitenfläche des Werkstücks werden von der Kamera fotografiert. Das von der Kamera aufgenommene Bild wird in einen Bildbereich der oberen Fläche und einen Bildbereich der seitlichen Fläche des Werkstücks geteilt und die beiden Bilder werden digitalisiert, wobei die Intensitätsverteilung der beiden digitalen Bilder des Werkstücks überprüft wird. Eine Fördereinrichtung befördert ein zu prüfendes Werkstück zu einer Prüfposition. Nach erfolgreicher Prüfung wird das Werkstück weiterbefördert.

### Aufgabenstellung

Die Aufgabe der Erfindung besteht darin, ein zuverlässiges und kostengünstiges Verfahren zur Sicherstellung und/oder Überprüfung der Qualität einer Crimpung sowie eine zur Durchführung des Verfahrens geeignete Vorrichtung bereitzustellen. Dabei ist insbesondere Aufgabe der Erfindung ein Verfahren zur Sicherstellung und/oder Überprüfung der Qualität einer Indent-Crimpung von insbesondere einer gedrehten Kontakthülse und einem Kabel und insbesondere einer Vierdorn-Crimpung anzugeben.

Die Aufgabe wird mit den Merkmalen des unabhängigen Anspruchs gelöst.

Vorteilhafte Ausführungen der Erfindung sind in den Unteransprüchen und/oder der nachfolgenden Beschreibung angegeben.

Die vorliegende Erfindung betrifft insbesondere ein Verfahren zur Sicherstellung der Qualität einer Crimpung unter Verwendung einer Crimpmaschine zur Crimpung eines Kabels mit einer Kontakthülse, wobei vorteilhaft ein erster optischer Sensor zur Erfassung und/oder Aufzeichnung von ersten Bilddaten der Kontakthülse verwendet wird, und wobei eine zur Auswertung der ersten Bilddaten geeignete Auswertelektronik verwendet wird, die mit einer elektronischen Steuerung signal- und/oder datentechnisch in Verbindung stehen kann. Die elektronische Steuerung kann geeigneter Weise eine speicherprogrammierbare elektronische Steuerung (SPS) sein.

Als erster optischer Sensor kann geeigneter Weise eine Kamera verwendet werden. Kameras sind kostengünstig erhältlich, einfach einzurichten und zu installieren und stehen in einer wünschenswerten Qualität auch vorteilhaft miniaturisiert zur Verfügung. Die Kamera kann beispielsweise eine CCD-Kamera sein.

Bei dem zur Crimpung mit der Kontakthülse vorgesehenen Kabel kann es sich insbesondere um ein einadriges Kabel mit einer Isolierung und einer Litze handeln, die eine Vielzahl von Einzeldrähten aufweist. Die Kontakthülse kann insbesondere eine gedrehte Kontakthülse sein.

In einem Schritt des Verfahrens werden von dem ersten optischen Sensor die ersten Bilddaten der Kontakthülse erfasst, woraufhin die Auswertelektronik in einem weiteren Schritt einen ersten Vergleich der ersten Bilddaten des ersten optischen Sensors mit ersten Referenzdaten einer vorbestimmten Kontakthülse durchführt. Es ist klar, dass dabei der erste optische Sensor signal- und/oder datentechnisch mit der Auswertelektronik in Verbindung steht.

Bild- und/oder Videodaten sind bei einer geeigneten softwaregestützten Nachbearbeitung und/oder Auswertung auch unter Berücksichtigung künstlicher Intelligenz und ähnlicher bildauswertender Verfahren besonders zeitnah und zuverlässig verarbeitbar. Hierfür geeignete Software-Routinen können auf der Auswertelektronik bereitgestellt sein.

In einem weiteren Schritt wird der erste Vergleich auf Vorliegen eines vorbestimmten ersten Kriteriums geprüft, wonach in einem weiteren Schritt ein erstes Signal ausgegeben wird, wenn das vorbestimmte erste Kriterium erfüllt ist.

Bei den vorstehend genannten ersten Referenzdaten kann es sich insbesondere um Bilddaten und/oder Abmessungen der vorbestimmten Kontakthülse handeln, die für die Auswertelektronik zur Verfügung stehen.

Bei dem vorbestimmten ersten Kriterium kann es sich insbesondere um eine vorbestimmte Abweichung der von dem ersten optischen Sensor erfassten ersten Bilddaten von den ersten Referenzdaten handeln.

Zur Durchführung des Vergleichs der ersten Bilddaten mit den ersten Referenzdaten, die Bilddaten und insbesondere auch Abmessungen aufweisen können, kann geeigneter Weise eine zur Objekterkennung geeignete Software und ein entsprechendes Verfahren, wie insbesondere eine Hough-Transformation verwendet werden. Dies gilt auch für die nachfolgend beschriebenen weiteren Schritte der Erfindung.

Bei dem ersten Signal kann es sich geeigneter Weise insbesondere um ein optisches und/oder akustisches Signal handeln und/oder um ein Steuersignal handeln, das die Crimpmaschine in einen vorbestimmten Betriebsmodus versetzt. Die Crimpmaschine kann dabei ausgeschaltet und/oder angehalten werden und/oder sie kann in einen Ruhezustand und/oder Standby Modus und/oder Betriebsmodus versetzt werden.

Besonders vorteilhaft wird die Erfassung der ersten Bilddaten und der erste Vergleich und die Prüfung des ersten Kriteriums und die Ausgabe des ersten Signals erfindungsgemäß durchgeführt, bevor das Kabel mit der Kontakthülse vercrimpt wird. Auf diese Weise kann vorteilhaft eine durch eine fehlerhafte und/oder Mängel aufweisende Kontakthülse und/oder durch eine nicht zur Crimpung mit dem Kabel vorgesehene und/oder nicht zur Crimpung mit einer eingestellten Crimphöhe vorgesehene Kontakthülse verursachte Crimpung mit einer mangelhaften Qualität ausgeschlossen werden.

Durch die vorteilhafte Prüfung des ersten Kriteriums vor Durchführung der Crimpung kann demnach ein Ausschuss von mangelhafte Qualität aufweisenden Crimpungen erheblich reduziert werden und darüber hinaus eine Durchführung von unerwünschten Crimpungen mit unerwünschtem und überflüssigem Zeitaufwand vermieden werden, wonach das vorstehende Verfahren von besonderem wirtschaftlichen Vorteil ist.

Geeigneter Weise werden von dem ersten optischen Sensor erste Bilddaten eines äußeren Rands und eines inneren Rands der Kontakthülse erfasst, wobei der innere Rand der Kontakthülse eine in die Kontakthülse eingeführte Ader des Kabels umgibt. Bilddaten des äußeren Rands und des inneren Rands der Kontakthülse lassen sich besonders einfach und zuverlässig erfassen und auswerten. Darüber hinaus sind Bilddaten des äußeren und insbesondere des inneren Rands der Kontakthülse besonders vorteilhaft für eine Kombination der vorstehend beschriebenen ersten Bilddaten der Erfindung mit den nachfolgend beschriebenen zweiten Bilddaten der Erfindung. Der innere Rand der Kontakthülse ist nämlich ein äußerer Rand einer Kontaktkammer zur Beherbergung einer Ader eines abisolierten Kabels.

Das erfindungsgemäße Verfahren zur Sicherstellung der Qualität einer Crimpung verwendet außerdem einen zweiten optischen Sensor zur Erfassung und Aufzeichnung von zweiten Bilddaten des Kabels wobei zur Auswertung der zweiten Bilddaten die geeignete Auswertelektronik verwendet wird, die mit einer elektronischen Steuerung signal- und/oder datentechnisch in Verbindung stehen kann.

Für die verwendete elektronische Steuerungs- und Auswertelektronik, den verwendeten zweiten optischen Sensor, das Kabel und die Kontakthülse gilt das vorstehend entsprechend zu der Steuerungs- und Auswertelektronik, dem ersten optischen Sensor, dem Kabel und der Kontakthülse Gesagte.

In einem weiteren Schritt des Verfahrens werden von dem zweiten optischen Sensor die zweiten Bilddaten des Kabels erfasst, woraufhin die Auswertelektronik einen zweiten Vergleich der zweiten Bilddaten des zweiten optischen Sensors mit zweiten Referenzdaten eines vorbestimmten Kabels durchführt. Der zweite optische Sensor steht dabei wie der erste optische Sensor signal- und/oder datentechnisch mit der Auswertelektronik in Verbindung, wobei auf der Auswertelektronik geeignete Software-Routinen zur Auswertung der Bilddaten bereitgestellt sein können.

In einem weiteren Schritt wird der zweite Vergleich auf Vorliegen eines vorbestimmten zweiten Kriteriums geprüft, wonach in einem weiteren Schritt ein zweites Signal ausgegeben wird, wenn das vorbestimmte zweite Kriterium erfüllt ist.

Bei den vorstehend genannten zweiten Referenzdaten kann es sich wie bei den vorstehend beschriebenen ersten Referenzdaten insbesondere um Bilddaten und/oder Abmessungen des vorbestimmten Kabels handeln, die für die Auswertelektronik zur Verfügung stehen.

Bei dem vorbestimmten zweiten Kriterium kann es sich insbesondere um eine vorbestimmte Abweichung der von dem zweiten optischen Sensor erfassten zweiten Bilddaten von den zweiten Referenzdaten handeln.

Das zweite Signal kann, wie das vorstehend beschriebene erste Signal, geeigneter Weise ein optisches und/oder akustisches Signal sein und/oder es kann ein Steuersignal sein, das die Crimpmaschine in einen vorbestimmten Betriebsmodus versetzt. Die Crimpmaschine kann dabei ausgeschaltet und/oder angehalten werden und/oder sie kann in einen Ruhezustand und/oder Standby Modus und/oder Betriebsmodus versetzt werden.

Besonders vorteilhaft wird die Erfassung der zweiten Bilddaten und der zweite Vergleich und die Prüfung des zweiten Kriteriums und die Ausgabe des zweiten Signals erfindungsgemäß durchgeführt, bevor das Kabel mit der Kontakthülse vercrimpt wird. Auf diese Weise kann vorteilhaft eine durch ein fehlerhaftes und/oder Mängel aufweisendes Kabel und/oder durch ein nicht zur Crimpung mit der Kontakthülse vorgesehenes und/oder nicht zur Crimpung mit einer eingestellten Crimphöhe vorgesehenes Kabel verursachte Crimpung mit einer mangelhaften Qualität ausgeschlossen werden.

Durch die vorteilhafte Prüfung des zweiten Kriteriums vor Durchführung der Crimpung kann demnach ein Ausschuss von mangelhafte Qualität aufweisende Crimpungen erheblich reduziert werden und darüber hinaus eine Durchführung von unerwünschten Crimpungen mit unerwünschtem und überflüssigem Zeitaufwand vermieden werden, wonach auch die vorstehenden Schritte des Verfahrens von besonderem wirtschaftlichen Vorteil sind.

Geeigneter Weise werden von dem zweiten optischen Sensor Bilddaten eines inneren Rands einer Isolierung des Kabels und/oder eines äußeren Rands einer mit der Isolierung versehenen Ader des Kabels und/oder eines äußeren Rands der Isolierung des Kabels erfasst. Bilddaten insbesondere des Rands der Ader des Kabels lassen sich besonders einfach und zuverlässig insbesondere auch bei einem einadrigen Kabel mit einer eine Vielzahl von Einzeldrähten aufweisenden Litze erfassen und auswerten.

Darüber hinaus sind Bilddaten des Rands der Ader des Kabels besonders vorteilhaft in Kombination mit den vorstehenden ersten Bilddaten des äußeren und inneren Rands der Kontakthülse des ersten Sensors. Auf diese Weise kann nämlich zuverlässig geprüft werden, ob das zur Crimpung vorgesehene Kabel zu der zur Crimpung vorgesehenen Kontakthülse passt.

Die vorliegende Erfindung betrifft demnach insbesondere vorteilhaft ein Verfahren zur Sicherstellung der Qualität einer Crimpung mit den vorstehend beschriebenen Schritten, wobei geeigneter Weise außerdem ein weiterer Vergleich der ersten Bilddaten mit den zweiten Bilddaten durchgeführt wird.

Der weitere Vergleich kann auf Vorliegen eines vorbestimmten weiteren Kriteriums geprüft werden, wobei wenn das weitere Kriterium erfüllt ist, ein weiteres Signal ausgegeben werden kann. Das weitere Signal kann wie das erste und zweite Signal ein optisches und/oder akustisches Signal und/oder ein vorstehend beschriebenes Steuersignal sein.

Geeigneter Weise kann bei einem erfindungsgemäßen Verfahren außerdem wenigstens ein dritter optischer Sensor zur Erfassung und von dritten Bilddaten der Kontakthülse und des Kabels verwendet werden, wobei die dritten Bilddaten der Kontakthülse und des Kabels von dem dritten optischen Sensor erfasst werden, und die Auswertelektronik einen dritten Vergleich der dritten Bilddaten des dritten optischen Sensors mit dritten Referenzdaten durchführen kann.

Der dritte Vergleich kann geeigneter Weise auf Vorliegen eines vorbestimmten dritten Kriteriums geprüft werden, woraufhin ein drittes Signal ausgegeben werden kann, wenn das vorbestimmte dritte Kriterium erfüllt ist.

Die Erfassung der dritten Bilddaten und der dritte Vergleich und die Prüfung des dritten Kriteriums und die Ausgabe des dritten Signals werden dabei durchgeführt, nachdem das Kabel mit der Kontakthülse vercrimpt ist. Auf diese Weise ist vorteilhaft die Möglichkeit geschaffen, auch das Ergebnis einer durchgeführten Crimpung optisch zu überwachen. Das dritte Signal kann wie das vorstehend beschriebene erste und zweite Signal geeigneter Weise ein optisches und/oder akustisches Signal sein und/oder ein Steuersignal sein, das die Crimpmaschine in einen vorbestimmten Betriebsmodus versetzt.

Der dritte optische Sensor kann wie der erste und zweite optische Sensor eine Kamera sein, wobei von dem dritten optischen Sensor geeigneter Weise längsseitige Bilddaten einer Seitenansicht des mit der Kontakthülse vercrimpten Kabels erfasst werden, wobei die dritten Bilddaten ein Einzelbild und/oder eine Videosequenz sein können. Geeigneter Weise können dabei zwei optische Sensoren verwendet werden, die längsseitige Bilddaten des mit der Kontakthülse vercrimpten Kabels aus verschiedenen Perspektiven erfassen. Ein geeigneter dritter optischer Sensor kann außerdem mittels einem Laserscanner bereitgestellt sein.

Bei den vorstehend beschriebenen erfindungsgemäßen Verfahren wird zur Durchführung einer vorbestimmten Crimpung zunächst das vorbestimmte Kabel und die vorbestimmte Kontakthülse ausgewählt und eine geeignete vorbestimmte Crimphöhe eingestellt. Bei Verwendung einer Crimpmaschine mit einer Abisoliereinrichtung wird darüber hinaus eine geeignete Abisolierung des Kabels eingestellt.

Die Auswertelektronik kann auf einfache Weise auf das vorbestimmte Kabel und die vorbestimmte Kontakthülse programmiert werden, wobei die ersten und/oder zweiten und/oder dritten Referenzdaten von der Auswertelektronik aus einer Vielzahl von vorbestimmten ersten und/oder vorbestimmten zweiten und/oder vorbestimmten dritten Referenzdaten ausgewählt werden können.

Auf diese Weise kann die Crimpmaschine und die Auswertelektronik besonders einfach eingerichtet werden, um ein vorstehendes Verfahren zur Sicherstellung und/oder Überprüfung der Qualität einer Crimpung zuverlässig durchzuführen.

Wie vorstehend beschrieben kann das erste und/oder zweite und/oder dritte Signal einen Ruhezustand und/oder Standby Modus und/oder Betriebsmodus der Crimpmaschine auslösen, wobei das Signal geeigneter Weise außerdem auf einem Bildschirm zusammen mit den erfassten ersten und/oder zweiten und/oder dritten erfassten Bilddaten angezeigt werden kann. Auf diese Weise wird eine besonders einfache Bedienung der Crimpmaschine für eine Bedienperson bereitgestellt.

Das erste und/oder zweite und/oder dritte Signal kann darüber hinaus einen entsprechenden ersten und/oder zweiten und/oder dritten Parameter umfassen, und/oder die vorstehend beschriebene Programmierung der Auswertelektronik auf das vorbestimmte Kabel und die vorbestimmte Kontakthülse kann einen entsprechenden vierten und fünften Parameter umfassen, wobei die genannten Parameter jeweils vorteilhaft bei weiteren Verfahren zur Sicherstellung und/oder Überprüfung der Qualität einer Crimpung verwendet werden können.

Der erste und/oder zweite und/oder dritte und/oder vierte und/oder fünfte Parameter kann von der Auswertelektronik insbesondere bei einem Verfahren zur Überprüfung der Qualität einer Crimpung des Kabels mit der Kontakthülse unter Verwendung einer Sensorik zur Messung einer Kraft und eines Wegs einer Einrichtung zur Betätigung und/oder Druckbeaufschlagung einer Crimpeinheit und der Auswertelektronik berücksichtigt werden, bei dem während des Crimpens eine Kraft/Weg-Kurve erfasst und auf einem Bildschirm angezeigt wird, und aus dem Verlauf der Kraft/Weg-Kurve eine Aussage über die Qualität der Crimpung getroffen wird.

Bei einem derartigen Verfahren kann aus einem Abgleich der Kraft/Weg-Kurve mit einem Referenzmodell insbesondere auch eine qualitative Fehleranalyse der Crimpung abgeleitet werden. Auf diese Weise ist es möglich Fehlerursachen, wie beispielsweise Bedienfehler, Materialmängel und insbesondere auch eine technische Störung der verwendeten Crimpvorrichtung zu erkennen und zeitnah und kostengünstig zu beheben. Die qualitative Fehleranalyse kann dabei unter Verwendung von gespeicherten Informationen über die Bewertung von Kraft/Weg-Kurven von fehlerhaften Crimpungen durchgeführt werden.

Beispielsweise kann eine qualitative und insbesondere automatisierte Analyse zu dem Ergebnis führen, dass ein zu großer Crimp-Rohling mit einer zu großen Kontakthülse verwendet wurde, oder dass beim Abisolieren eines Kabels oder beim Einführen eines Kabels in eine Kontakthülse die Litze des Kabels beeinträchtigt wurde. Das Ergebnis der Analyse kann geeigneter Weise und vorteilhaft zusammen mit der Kraft/Weg-Kurve auf dem Bildschirm angezeigt werden.

Eine vorstehende Analyse kann dabei bei Verwendung des ersten und/oder zweiten und/oder dritten und/oder vierten und/oder fünften Parameters besonders genau und zuverlässig durchgeführt und/oder überprüft werden, wobei insbesondere vorteilhaft zwischen Materialmängeln und Bedienfehlern und/oder technischen Störungen als Mängelursache unterschieden werden kann.

Ein Verfahren nach einer vorstehend beschriebenen Ausführung der Erfindung ist besonders geeignet zur Überwachung des Betriebszustands einer Indent-Crimpeinrichtung einer nachfolgend beschriebenen Crimpmaschine, die vorzugsweise eine Zweidorn-Crimpeinrichtung und besonders bevorzugt eine Vierdorn-Crimpeinrichtung sein kann und zur Crimpung von gedrehten Kontakthülsen besonders geeignet ist.

Die vorliegende Erfindung betrifft demnach insbesondere außerdem eine Crimpmaschine, die zur Durchführung eines vorstehenden erfindungsgemäßen Verfahrens eingerichtet ist, wobei die Crimpmaschine insbesondere den ersten optischen Sensor und/oder den zweiten optischen Sensor und/oder wenigstens einen dritten optischen Sensor aufweisen kann.

Eine vorstehende geeignete Crimpmaschine kann dabei insbesondere vorteilhaft mit einer Wendelfördereinrichtung zur Zuführung einer Vielzahl von zur Crimpung mit einem Kabel vorgesehenen Kontakthülsen ausgestattet sein, wobei die Wendelfördereinrichtung geeigneter Weise eine Zuführschiene aufweisen kann, mittels der die Kontakthülsen der Crimpmaschine in einer vorbestimmten Orientierung zugeführt werden.

Der erste optische Sensor kann zur Erfassung der ersten Bilddaten einer Kontakthülse vorteilhaft an der Zuführschiene vorgesehen sein. Durch diese Anordnung ist auf einfache Weise die Möglichkeit geschaffen, Bilddaten einer Kontakthülse aus einer vorbestimmten Orientierung zu erfassen und dabei insbesondere Bilddaten eines äußeren Rands und eines inneren Rands der Kontakthülse zu erfassen, wobei der innere Rand der mit einem Kabel vercrimpten Kontakthülse eine in die Kontakthülse eingeführte Ader des Kabels umgibt.

Eine vorstehende geeignete Crimpmaschine kann weiterhin eine Abisoliereinrichtung zur Abisolierung des zur Crimpung mit der Kontakthülse vorgesehenen Kabels und eine Öffnung zur manuellen Zuführung des Kabels zur Abisolierung und anschließenden Crimpung des Kabels mittels einer Crimpeinrichtung aufweist.

Der zweite optische Sensor kann dabei vorteilhaft an der vorstehenden Öffnung vorgesehen sein, wobei der optische Sensor auch schwenkbar an der Öffnung angeordnet sein kann. Mit dieser Anordnung kann der zweite optische Sensor die zweiten Bilddaten des inneren Rands der Isolierung des einadrigen Kabels und/oder des äußeren Rands der mit der Isolierung versehenen Ader des Kabels und/oder eines äußeren Rands der Isolierung des Kabels besonders zuverlässig und mit einer wünschenswerten Auflösung erfassen, bevor das Kabel abisoliert wird.

Eine Bedienperson, die der Crimpmaschine das Kabel durch die Öffnung manuell zuführt, kann dabei das Kabel auf einfache Weise zur Erfassung der zweiten Bilddaten mittels dem zweiten optischen Sensor zuführen. Die Crimpmaschine kann dabei derart eingerichtet sein, dass der zweite optische Sensor nach Erfassung der zweiten Bilddaten bei einer Durchführung des vorstehenden erfindungsgemäßen Verfahrens und bei Vorliegen eines vorbestimmten zweiten Kriteriums, die Öffnung zur weiteren Zuführung des Kabels zu der Abisoliereinrichtung und zur anschließenden Crimpung mit der Kontakthülse freigibt und/oder sperrt. Die Öffnung dient dabei außerdem zur manuellen Entnahme des mit der Kontakthülse vercrimpten Kabels.

Eine vorstehende geeignete Crimpmaschine kann weiterhin den wenigstens einen dritten optischen Sensor zur Erfassung von längsseitig aufgenommenen dritten Bilddaten des mit der Kontakthülse vercrimpten Kabels aufweisen. Der dritte optische Sensor kann geeigneter Weise an der vorstehenden Öffnung der Crimpmaschine derart angeordnet sein, dass er ein Einzelbild und/oder eine Videosequenz des mit der Kontakthülse vercrimpten Kabels erfasst. Die Erfassung der Bilddaten kann dabei auf einfache Weise während einer manuellen Entnahme des mit der Kontakthülse vercrimpten Kabels erfolgen.

Geeigneter Weise können zwei dritte optische Sensoren an der Öffnung vorgesehen sein, die längsseitige Bilddaten bzw. Seitenansichten des mit der Kontakthülse vercrimpten Kabels aus verschiedenen Perspektiven erfassen. Ein geeigneter dritter optischer Sensor kann außerdem mittels einem Laserscanner bereitgestellt sein.

Eine geeignete Crimpmaschine kann weiterhin eine Sensorik zur Messung einer Kraft und eines Wegs einer Einrichtung zur Betätigung und/oder Druckbeaufschlagung der Crimpeinrichtung und eine geeignet eingerichtete Steuerungs- und Auswertelektronik und einen Bildschirm aufweisen, so dass während des Crimpens eine Kraft/Weg-Kurve erfasst und auf einem Bildschirm angezeigt werden kann, und aus dem Verlauf der Kraft/Weg-Kurve eine Aussage über die Qualität der Crimpung getroffen werden kann.

Die vorstehende Crimpeinrichtung der Crimpmaschine kann insbesondere eine Indent-Crimpeinrichtung und vorzugsweise eine Zweidorn-Crimpeinrichtung und besonders bevorzugt einen Vierdorn-Crimpeinrichtung sein, und somit zur Crimpung des Kabels mit einer gedrehten Kontakthülse besonders geeignet sein.

Eine vorstehende Crimpmaschine ist somit zur Durchführung eines erfindungsgemäßen Verfahrens geeignet, wobei ein zur Durchführung des Verfahrens geeignetes Softwareprogramm geeigneter Weise auf der Steuerungs- und Auswertelektronik der Crimpmaschine vorgesehen sein kann. Es ist klar, dass die Steuerungs- und Auswertelektronik hierfür geeignete Mittel wie beispielsweise eine Speichermöglichkeit zur Aufzeichnung von Daten aufweist.

Eine geeignete Crimpmaschine kann darüber hinaus Schnittstellen zu kabelgestützten und/oder drahtlosen signal- und/oder datentechnischen Verbindungen aufweisen. Die Crimpmaschine kann auf diese Weise vernetzt sein, wonach das erste und/oder zweite und/oder dritte Signal eine vorbestimmte Meldung sein kann, die an eine externe Einrichtung gesendet werden kann. Beispielsweise kann eine derartige vorstehende Meldung an ein Mobiltelefon eines Servicetechnikers erfolgen, wonach die Möglichkeit einer vorteilhaft zeitnahen Wartung der Crimpmaschine bereitgestellt ist.

### Ausführungsbeispiele

Ausführungsbeispiele der Erfindung sind in den Zeichnungen dargestellt und werden im Folgenden näher erläutert. Es zeigen:
- Fig. 1A: eine schematische Darstellung einer Crimpmaschine nach einer Ausführung der Erfindung;
- Fig. 1B: eine vergrößerte Darstellung einer Öffnung der Crimpmaschine von Fig. 1A zum Einführen eines zu vercrimpenden Kabels;
- Fig. 1C: eine weitere Darstellung der Öffnung von Fig. 1B;
- Fig. 1D: ein Kabel mit einer Kontakthülse, lose und miteinander vercrimpt;
- Fig. 1E: eine vergrößerte Darstellung einer Zuführschiene der Crimpmaschine von Fig. 1A mit zu vercrimpenden Kontakthülsen;
- Fig. 2A: eine vergrößerte Darstellung einer Kontakthülse im Teilschnitt zusammen mit einem ersten optischen Sensor;
- Fig. 2B: eine Draufsicht auf eine Öffnung einer Kontakthülse;
- Fig. 2C: eine Draufsicht auf eine Öffnung einer weiteren Kontakthülse;
- Fig. 2D: eine vergrößerte Darstellung eines isolierten einadrigen Kabels mit einer eine Vielzahl von Einzeldrähten aufweisenden Litze;
- Fig. 3A bis: jeweils eine Seitenansicht eines fehlerhaft mit einer
- Fig. 3E: Kontakthülse vercrimpten Kabels;
- Fig. 3F: eine Seitenansicht eines korrekt mit einer Kontakthülse vercrimpten Kabels;
- Fig. 4A: eine schematische Darstellung wesentlicher Komponenten der Crimpmaschine von Fig. 1A nach einer Ausführung der Erfindung mit einer Crimpeinrichtung;
- Fig. 4B: die Crimpeinrichtung von Fig. 4A in einer vergrößerten Darstellung;
- Fig. 5A: eine mit der Crimpmaschine aufgezeichnete Kraft/Weg-Kurve einer Crimpung nach einer Ausführung der Erfindung;
- Fig. 5B: eine vergrößerte Darstellung der Crimpeinrichtung von Fig. 4A in einer ersten Position, zusammen mit einer bestimmungsgemäß zum Vercrimpen angeordneten Kontakthülse und einem Kabel;
- Fig. 5C: die Crimpeinrichtung mit der Kontakthülse und dem Kabel von Fig. 5B in einer zweiten Position mit einer vorbestimmten Crimphöhe der Crimpung;
- Fig. 6A: weitere Kraft/Weg-Kurven einer Crimpung zusammen mit zwei Hüllkurven eines Referenzmodells nach einer Ausführung der Erfindung;
- Fig. 6B: einen vergrößerten Schnitt durch die bestimmungsgemäß zur Crimpung mit einem Kabel versehene Kontakthülse von Fig. 5B; und
- Fig. 6C: ein Schliffbild eines Schnitts durch die Crimpung der Kontakthülse mit dem Kabel von Fig. 5C.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein. Der Einfachheit und Übersichtlichkeit halber sind in den Zeichnungen jeweils nur ein gleiches oder gleichartiges Element mit einem Bezugszeichen versehen.

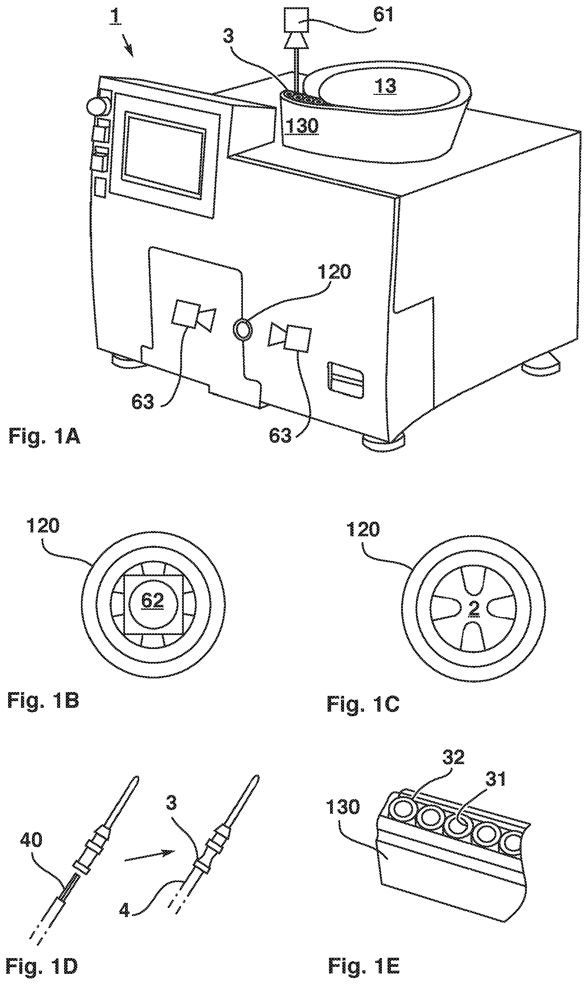

Fig. 1A zeigt eine schematische Darstellung einer Crimpmaschine 1 nach einer Ausführung der Erfindung, die zur Crimpung eines in Fig. 1D dargestellten Kabels 4 mit einer Kontakthülse 3 geeignet ist. An der Crimpmaschine 1 ist zur automatischen Zuführung der zu vercrimpenden Kontakthülse 3 eine Wendelfördereinrichtung 13 mit einer Zuführschiene 130 vorgesehen, mittels der die Kontakthülsen 3 der Crimpmaschine 1 in einer vorbestimmten Orientierung zugeführt werden. Ein Rand der in der Zuführschiene 130 nebeneinander aufgereihten Kontakthülsen 3 weist einen inneren Rand 31 und einen äußeren Rand 32 auf und ist von oben sichtbar.

Oberhalb der Zuführschiene 130 ist ein erster optischer Sensor 61 zur Erfassung von ersten Bilddaten zur Durchführung eines eingangs beschriebenen erfindungsgemäßen Verfahrens zur Sicherstellung und/oder Überprüfung der Qualität einer Crimpung angeordnet. Fig. 1E zeigt eine vergrößerte Darstellung der Zuführschiene 130 mit in der Zuführschiene 130 angeordneten Kontakthülsen 3.

Im Inneren der Crimpmaschine 1 ist eine in den Zeichnungen nicht dargestellte Abisoliervorrichtung und eine Crimpeinrichtung 2 vorgesehen. Die Crimpmaschine 1 weist eine Öffnung 120 zur manuellen Zuführung eines Kabels 4 zur Abisolierung und anschließenden Crimpung des Kabels 4 mit einer Kontakthülse 3 auf. Eine vergrößerte Darstellung der Öffnung 120 mit einem sichtbaren über die Öffnung 120 zugänglichen Bereich der Crimpeinrichtung 2 ist in Fig. 1C schematisch dargestellt. Im Inneren der Crimpmaschine 1 ist an der Öffnung 120 ein schematisch in Fig. 1B dargestellter zweiter optischer Sensor 62 zur Erfassung von zweiten Bilddaten eines zu vercrimpenden Kabels 4 zur Durchführung eines eingangs beschriebenen Verfahrens nach einer Ausführung der Erfindung vorgesehen.

Der zweite optische Sensor 62 ist geeigneter Weise schwenkbar an der Öffnung 120 derart angeordnet, dass zweite Bilddaten eines inneren Rands 41 einer Isolierung des Kabels 4 und/oder eines äußeren Rands 41 einer mit der Isolierung versehenen Ader des Kabels 4 und/oder eines äußeren Rands 42 der Isolierung des Kabels 4 erfasst werden können. Zur Erfassung der zweiten Bilddaten wird das Kabel 4 zu seiner bestimmungsgemäßen Zuführung in das Innere der Crimpmaschine 1 von einer Bedienperson vor den zweiten optischen Sensor 62 gehalten.

Der Sensor 62 kann dabei derart schwenkbar an der Öffnung 120 angeordnet sein, dass nach Durchführung eines eingangs beschriebenen Verfahrens nach einer Ausführung der Erfindung und bei Erkennung auf Vorliegen eines vorbestimmten zweiten Kriteriums die Öffnung 120 mittels Schwenken des zweiten optischen Sensors 62 zur weiteren manuellen Einführung des Kabels 4 in das Innere der Crimpmaschine 1 zu der Abisoliereinrichtung und der Crimpeinrichtung 2 freigegeben wird.

An der Öffnung 120 der Crimpmaschine 1 sind außerdem zwei dritte optische Sensoren 63 zur Erfassung von dritten längsseitigen Bilddaten einer Seitenansicht eines mit einer Kontakthülse 3 vercrimpten Kabels 4 vorgesehen, wobei die dritten Bilddaten ein Einzelbild und/oder eine Videosequenz sein können. Die optischen Sensoren 63 sind derart angeordnet, dass die längsseitigen Bilddaten des Kabels 4 und der Kontakthülse 3 aus verschiedenen Perspektiven erfasst werden. Bei einem eingangs beschriebenen Verfahren nach einer Ausführung der Erfindung werden die dritten Bilddaten mittels der optischen Sensoren 63 bei einer manuellen Entnahme der mit dem Kabel 4 vercrimpten Kontakthülse 3 als Einzelbilder und/oder als Videosequenzen erfasst.

Der erste optische Sensor 61 und/oder der zweite optische Sensor 62 kann insbesondere eine erste und/oder zweite Kamera sein, und die beiden dritten optischen Sensoren 63 können jeweils mittels einer dritten Kamera bereitgestellt sein und/oder mittels einem Laserscanner bereitgestellt sein.

Fig. 1D zeigt ein Kabel 4 mit einer Kontakthülse 3, jeweils lose und miteinander vercrimpt. Bei der Kontakthülse 3 handelt es sich um eine gedrehte Kontakthülse 3, und bei dem Kabel 4 handelt es sich um ein einadriges Kabel 4 mit einer eine Vielzahl von Einzeldrähten 40 aufweisenden Litze. Die Kontakthülse 3 und das Kabel 4 sind zur Crimpung mit der Crimpmaschine 1 besonders geeignet.

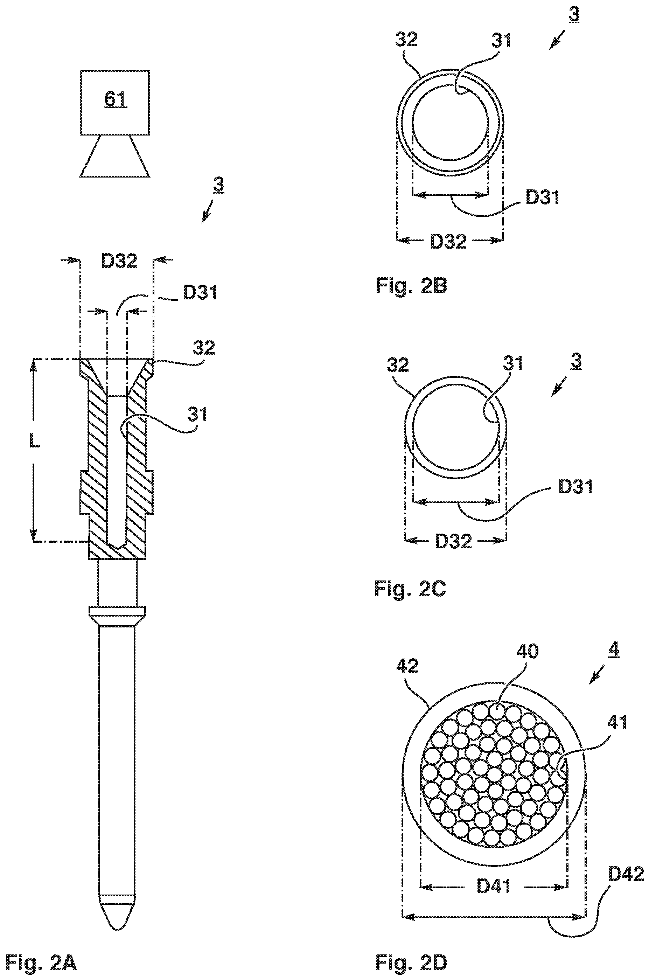

Fig. 2A zeigt eine vergrößerte Darstellung einer Kontakthülse 3 im Teilschnitt zusammen mit dem ersten optischen Sensor 61. Fig. 2B zeigt eine Draufsicht auf eine Öffnung einer Kontakthülse 3 zur Einführung einer abisolierten Ader eines Kabels 4 in die Kontaktkammer der Kontakthülse 3 mit der Länge L, und Fig. 2C zeigt eine Draufsicht auf eine Öffnung einer weiteren Kontakthülse 3. Bei den Kontakthülsen 3 handelt es sich um gedrehte Kontakthülsen 3, die zur Crimpung mit der Crimpmaschine 1 geeignet sind.

Der erste optische Sensor 61 ist mit seiner optischen Achse parallel zur Mittelachse der Kontakthülse 3 derart angeordnet, dass erste Bilddaten des kreisförmigen inneren Rands 31 und des kreisförmigen äußeren Rands 32 der Kontakthülse 3 besonders zuverlässig und mit einer wünschenswerten Auflösung von dem ersten optischen Sensor 61 erfasst werden können.

Der kreisförmige innere Rand 31 hat einen Durchmesser D31 und der kreisförmige äußere Rand 32 hat einen Durchmesser D32.

Unter Verwendung von eingangs erwähnten geeigneten Software-Routinen eines erfindungsgemäßen Verfahrens lässt sich auf einfache Weise aus den erfassten ersten Bilddaten der Durchmesser D31 und D32 und der mit dem Durchmesser D31 und D32 korrespondierende Querschnitt ermitteln. Auf diese Weise können mittels einem erfindungsgemäßen Verfahren nach einer Ausführung der Erfindung die Abmessungen der Kontakthülse 3 mit einer wünschenswerten Genauigkeit ermittelt werden.

Die erfassten ersten Bilddaten und die aus den erfassten Bilddaten ermittelten Abmessungen der Kontakthülse 3 sind für einen eingangs beschriebenen Vergleich mit Referenzdaten einer vorbestimmten Kontakthülse 3 besonders geeignet, wobei die Referenzdaten Bilddaten und/oder Abmessungen der vorbestimmten Kontakthülse 3 sein können.

Die Öffnung der Kontakthülse 3 von Fig. 2A und 2B ist für eine einfache Einführung einer abisolierten Ader eines Kabels 4 trichterförmig ausgebildet.

Fig. 2D zeigt eine vergrößerte Darstellung eines isolierten einadrigen Kabels 4 mit einer eine Vielzahl von Einzeldrähten 40 aufweisenden Litze. Die Isolierung des Kabels 4 hat einen äußeren Rand 42 und einen inneren Rand 41, wobei der innere Rand 41 der äußere Rand der Litze ist.

Der an der Öffnung 120 der Crimpmaschine 1 vorgesehene zweite optische Sensor 62 ist mit seiner optischen Achse derart an der Öffnung 120 angeordnet, dass zweite Bilddaten des kreisförmigen äußeren Rands 42 der Isolierung und insbesondere zweite Bilddaten des kreisförmigen inneren Rands 41 der Isolierung des Kabels 4 besonders zuverlässig und mit einer wünschenswerten Auflösung von dem zweiten optischen Sensor 62 erfasst werden können.

Der kreisförmige innere Rand 41 der Isolierung, der der äußere Rand der Litze ist, hat einen Durchmesser D41 und der kreisförmige äußere Rand 42 der Isolierung hat einen Durchmesser D42. Unter Verwendung von eingangs erwähnten geeigneten Software-Routinen eines erfindungsgemäßen Verfahrens lässt sich auf einfache Weise aus den erfassten zweiten Bilddaten der Durchmesser D41 und D42 und der mit dem Durchmesser D41 und D42 korrespondierende Querschnitt ermitteln. Auf diese Weise können mittels einem erfindungsgemäßen Verfahren nach einer Ausführung der Erfindung die Abmessungen des Kabels 4 und insbesondere der Ader des Kabels 4 mit einer wünschenswerten Genauigkeit ermittelt werden. Zur Durchführung eines eingangs beschriebenen erfindungsgemäßen Verfahrens ist dabei der Durchmesser D41 und der mit ihm korrespondierende Querschnitt der Litze von besonderem Interesse.

Die vorstehenden erfassten zweiten Bilddaten und die aus den Bilddaten ermittelten Abmessungen des Kabels 4 sind für einen eingangs beschriebenen Vergleich mit Referenzdaten eines vorbestimmten Kabels 4 geeignet, wobei die Referenzdaten Bilddaten und/oder Abmessungen des vorbestimmten Kabels 4 sein können. Darüber hinaus kann bei einem eingangs beschriebenen erfindungsgemäßen Verfahren nach einer Ausführung der Erfindung insbesondere der Durchmesser D41 und der mit ihm korrespondierende Querschnitt der Litze des Kabels 4 jeweils mit dem vorstehend beschriebenen Durchmesser D31 und dem mit dem Durchmesser D31 korrespondierenden Querschnitt der Kontakthülse 3 verglichen werden.

Auch dieser Vergleich kann dabei auf Vorliegen eines vorbestimmten Kriteriums geprüft werden, und ein vorbestimmtes Signal ausgegeben werden, wenn das Kriterium erfüllt ist. Geeigneter Weise kann das vorbestimmte Kriterium eine vorbestimmte Abweichung des Durchmessers D31 von dem Durchmesser D41 sein, die bei einem für eine Kontakthülse 3 nicht geeigneten Kabel 4 auftritt, wonach das Signal beispielsweise einen Ruhezustand der Crimpmaschine 1 auslösen kann.

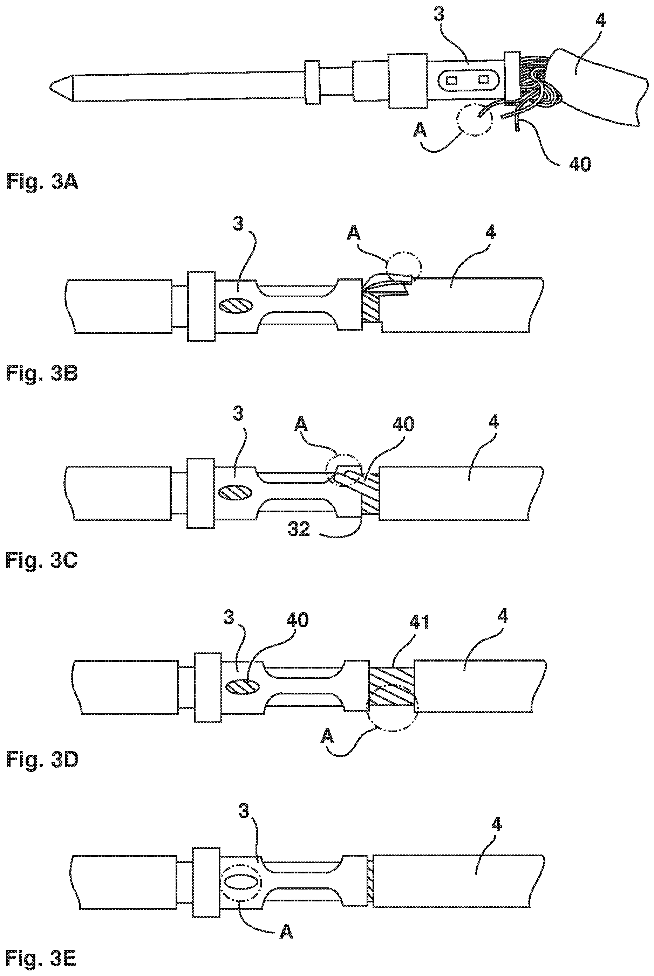

Fig. 3A bis 3E zeigen jeweils eine Seitenansicht eines fehlerhaft mit einer Kontakthülse 3 vercrimpten Kabels 4. Die Seitenansichten von Fig. 3A bis 3E entsprechen jeweils von einem dritten optischen Sensor 63 erfassten dritten längsseitigen Bilddaten eines mit einer Kontakthülse 3 vercrimpten Kabels 4. Die dritten Bilddaten werden dabei mit vorbestimmten dritten Referenzdaten verglichen, wobei die dritten Referenzdaten insbesondere Bilddaten eines vorbestimmten Ausschnitts A mit eine fehlerhafte und/oder eine korrekte Crimpung charakterisierenden Referenzbilddaten sein können.

Bei der fehlerhaften Crimpung von Fig. 3A sind Einzeldrähte 40 der Litze des einadrigen Kabels 4 nicht in die Kontakthülse 3 eingeführt und befinden sich auf der Isolierung des Kabels 4 und auf der Kontakthülse 3 und stehen darüber hinaus von dem Kabel 4 und der Kontakthülse 3 ab. Zur Erkennung einer derartigen fehlerhaften Crimpung sind insbesondere vorteilhaft Referenzbilddaten des Ausschnitts A von Fig. 3A geeignet, wobei die Referenzbilddaten eine fehlerhafte Crimpung charakterisieren.

Anders als in Fig. 3A sind in Fig. 3B bis 3E jeweils lediglich ein für ein eingangs beschriebenes Verfahren nach einer Ausführung der Erfindung besonders interessierender Ausschnitt der Kontakthülse 3 dargestellt. Geeigneter Weise werden bei dem Verfahren von dem dritten optischen Sensor 63 auch nur ein zur Durchführung eines Vergleichs mit den vorbestimmten dritten Referenzdaten interessierender Ausschnitt einer Seitenansicht des mit einer Kontakthülse 3 vercrimpten Kabels 4 erfasst.

Bei der fehlerhaften Crimpung von Fig. 3B sind Einzeldrähte 40 der Litze des einadrigen Kabels 4 nicht in die Kontakthülse 3 eingeführt und befinden sich auf der Isolierung des Kabels 4. Zur Erkennung einer derartigen fehlerhaften Crimpung sind insbesondere vorteilhaft Referenzbilddaten des Ausschnitts A von Fig. 3B geeignet, wobei die Referenzbilddaten des Ausschnitts A eine fehlerhafte Crimpung charakterisieren.

Bei der fehlerhaften Crimpung von Fig. 3C sind Einzeldrähte 40 der Litze des einadrigen Kabels 4 nicht in die Kontakthülse 3 eingeführt und befinden sich auf der Kontakthülse 3. Zur Erkennung einer derartigen fehlerhaften Crimpung sind insbesondere vorteilhaft Referenzbilddaten des Ausschnitts A von Fig. 3C geeignet, wobei die Referenzbilddaten des Ausschnitts A eine fehlerhafte Crimpung charakterisieren.

Bei der fehlerhaften Crimpung von Fig. 3D ist das einadrige Kabel 4 zu lang abisoliert. Zur Erkennung einer derartigen fehlerhaften Crimpung sind insbesondere vorteilhaft Referenzbilddaten des Ausschnitts A von Fig. 3D geeignet, wobei die Referenzbilddaten des Ausschnitts A eine fehlerhafte Crimpung charakterisieren.

Bei der fehlerhaften Crimpung von Fig. 3E ist das einadrige Kabel 4 zu kurz abisoliert. Zur Erkennung einer derartigen fehlerhaften Crimpung sind insbesondere vorteilhaft Referenzbilddaten des Ausschnitts A von Fig. 3E geeignet, wobei die Referenzbilddaten des Ausschnitts A eine fehlerhafte Crimpung charakterisieren. Die Kontakthülse 3 der Crimpung von Fig. 3B bis 3E weist nämlich ein Loch auf, in dem die Litze des Kabels 4 bei einer korrekten Abisolierung des Kabels 4 sichtbar sein sollte.

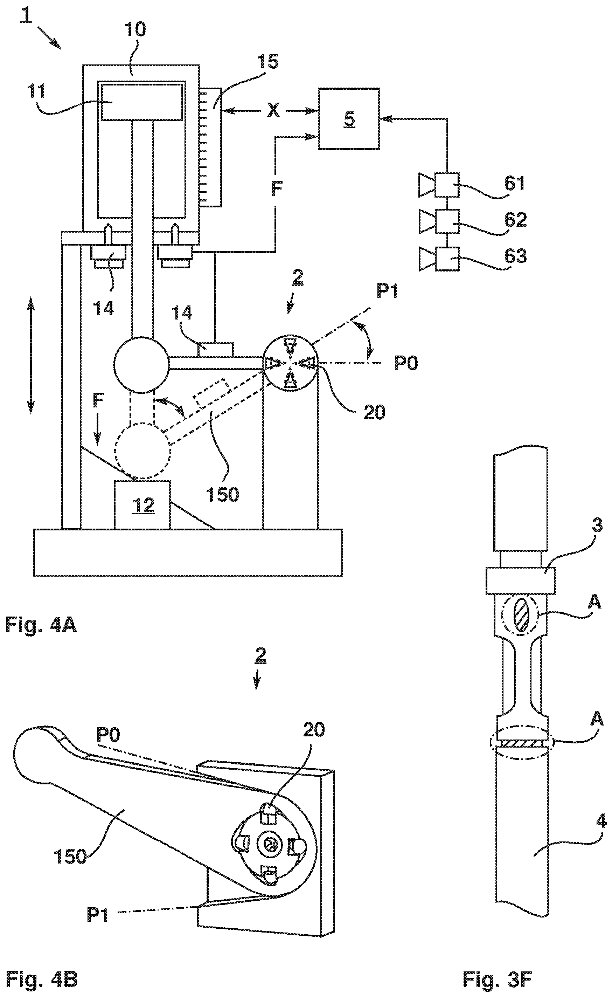

Fig. 3F zeigt einen interessierenden Ausschnitt eines korrekt mit einer Kontakthülse 3 vercrimpten Kabels 4. Zur Erkennung einer derartigen korrekten Crimpung sind insbesondere vorteilhaft Referenzbilddaten der Ausschnitte A von Fig. 3F geeignet, wobei die Referenzbilddaten der Ausschnitte A eine korrekte Crimpung charakterisieren.

Fig. 4A zeigt eine schematische Darstellung der wesentlichen Komponenten einer Crimpmaschine 1 nach einer Ausführung der Erfindung mit einer Crimpeinrichtung 2.

Bei der Crimpeinrichtung 2 handelt es sich um eine Indent-Crimpvorrichtung und insbesondere um ein Vierdorn-Crimpvorrichtung mit einer vier Presselemente 20 aufweisenden Crimpeinrichtung 2, die zur Verpressung eines abisolierten Kabels bzw. einer Litze eines abisolierten einadrigen Kabels 4 mit einer gedrehten Kontakthülse 3 besonders geeignet ist. Die Presselemente 20 sind geeigneter Weise als spitz zulaufende Dorne 20 ausgebildet.

Zur Betätigung der Crimpeinrichtung 2 weist die Crimpmaschine 1 eine pneumatische Druckeinrichtung mit einem Zylinder 10 und einem Kolben 11 auf, die über einen Hebel 150 mit der Crimpeinrichtung 2 in Wirkverbindung steht. Für eine Einrichtung einer vorbestimmten Crimphöhe mittels Justierdornen ist eine geeignete Einstellmechanik 12 vorgesehen, die einen verstellbaren Anschlag für den Hebel 150 aufweisen kann.

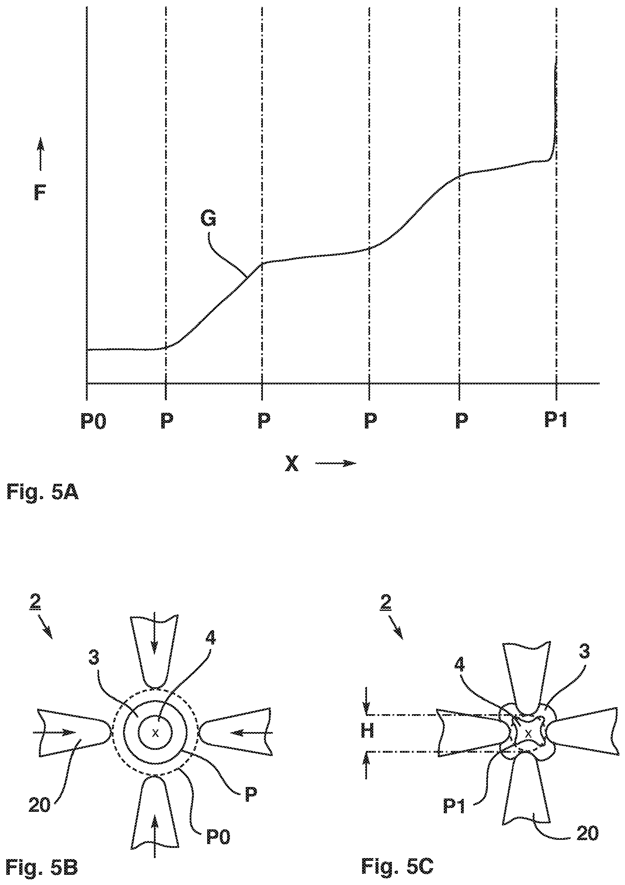

Bei einer Crimpung mittels Verpressung einer insbesondere gedrehten Kontakthülse 3 mit einem Kabel 4 wird die Kontakthülse 3 mit der in ihr befindlichen Litze des Kabels 4 bestimmungsgemäß in die Crimpeinrichtung 2 eingeführt, und die Crimpeinrichtung 2 mittels der Druckeinrichtung betätigt und mit Druck beaufschlagt. Mittels einer vertikalen Bewegung und einer vertikal wirkenden Kraft F der Druckeinrichtung wird der mit der Crimpeinrichtung 2 gekoppelte Hebel 150 verschwenkt. Die Crimpeinrichtung 2 und der Hebel 150 sind dabei derart ausgebildet und angeordnet, dass sich die Dorne 20 bei einer Schwenkung aus ihrer Ruheposition P0 aufeinander zu bewegen oder in ihre Ruheposition P0 gebracht werden, was nachfolgend unter Bezugnahme auf Fig. 1B beschrieben wird. Dabei liegen die Spitzen der Dorne 20 jeweils auf konzentrischen Kreisen, was nachfolgend unter Bezugnahme auf Fig. 5B und 5C beschrieben wird.

Die Crimpmaschine 1 ist zur Überprüfung der Qualität einer Crimpung eines vorbestimmten Kabels 4 mit einer vorbestimmten Kontakthülse 3 geeignet eingerichtet und weist hierfür einen Wegsensor 15 und wenigstens einen Kraftsensor 14 auf. Der Wegsensor 15 kann geeigneter Weise ein Positionstransmitter mit einem Hallsensor sein und an dem Zylinder 10 der Druckeinrichtung vorgesehen sein. Der Kraftsensor 14 kann geeigneter Weise ein Piezosensor 14 sein und an dem Hebel 150 angeordnet sein und/oder wenigstens ein an einer Befestigung des Zylinders 10 vorgesehener Piezosensor sein. Die Piezosensoren messen dabei jeweils eine Dehnung bzw. Spannung bei der Betätigung des Hebels 150 bzw. die auf den Zylinder 10 wirkende Gegenkraft eines auf den Kolben 11 wirkenden Drucks.

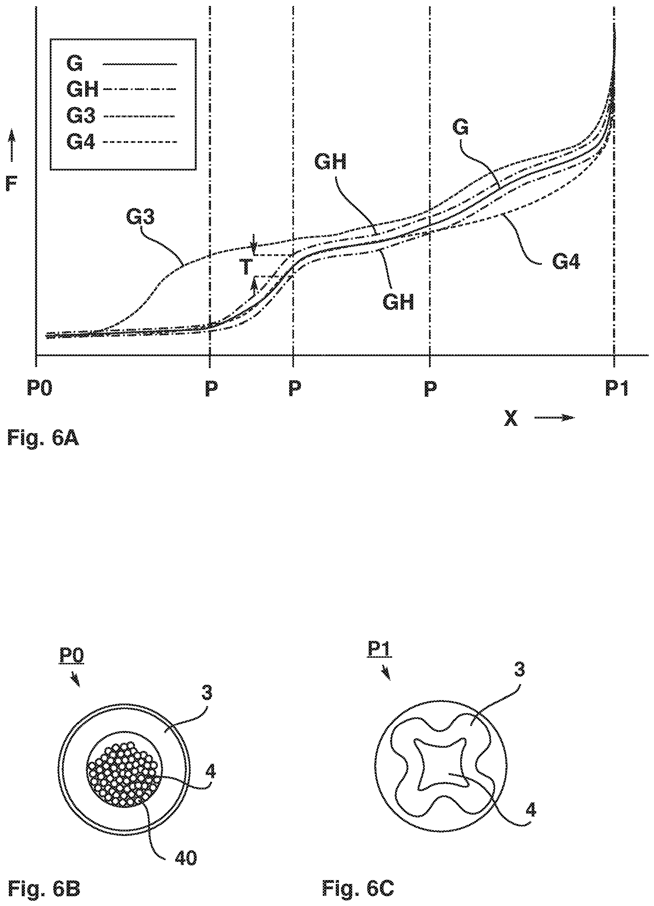

Die Sensorik 15, 14 ist mit einer Auswertelektronik 5 signal- und/oder datentechnisch verbunden. Die Auswertelektronik 5 kann einen Bildschirm steuern und eine unter Verwendung der Signale der Sensorik 15, 14 erfasste Kraft/Weg-Kurve G einer Crimpung zusammen mit weiteren Informationen auf dem Bildschirm anzeigen. Beispiele einer Kraft/Weg-Kurve G werden nachfolgend unter Bezugnahme von Fig. 5A und 6A beschrieben.

Der unter Bezugnahme auf Fig. 1A beschriebene erste optische Sensor 61 und der zweite optische Sensor 62 und der wenigstens eine dritte optische Sensor 63 ist wie die Sensorik 15, 14 signal- und/oder datentechnisch mit der Auswertelektronik 5 verbunden.

Fig. 4B zeigt eine vergrößerte, detailliertere Darstellung der Crimpeinrichtung 2. Der Übersichtlichkeit halber ist der Kraftsensor 14 auf dem Hebel 150 in Fig. 4B nicht dargestellt.

Die Crimpeinrichtung 2 weist eine zylindrische Führung auf, in der vier Dorne 20 radial beweglich gelagert sind. Die Spitzen der Dorne 20 sind aufeinander zu ausgerichtet. Der Hebel 150 ist auf der zylindrischen Führung axial schwenkbar bzw. drehbar gelagert und weist eine Innenkontur auf, die mit aus der zylindrischen Führung herausragenden Köpfen der Dorne 20 zusammenwirkt.

Bei einer Verschwenkung des Hebels 150 werden die Spitzen der Dorne 20 in Richtung der Achse der zylindrischen Führung bzw. der Schwenkachse des Hebels 150 aufeinander zu bzw. voneinander wegbewegt. Die Spitzen der Dorne 20 liegen dabei jeweils auf konzentrischen Kreisen. Bei einer Crimpung wird eine mit einem Kabel 4 versehene Kontakthülse 3 auf diese Weise mittels Betätigung des Hebels 150 an der Achse der zylindrischen Führung mit dem Kabel 4 verpresst.

Eine Crimpmaschine 1 mit den vorstehend beschriebenen Komponenten ist zur Durchführung eines eingangs beschriebenen Verfahrens nach einer Ausführung der Erfindung geeignet, wobei die Crimpmaschine 1 außerdem eine in Fig. 4A nicht dargestellte Abisoliereinrichtung zur Abisolierung eines Kabels 4 und eine Wendelfördereinrichtung 13 zur Zuführung von Kontakthülsen 3 aufweist.

Fig. 5A zeigt eine Kraft/Weg-Kurve G einer mittels einer Crimpmaschine 1 von Fig. 1A und 4A durchgeführten Crimpung einer Kontakthülse 3 mit einem Kabel 4 nach einer Ausführung der Erfindung.

Die Dorne 20 der Crimpeinrichtung 2 werden bei der Crimpung von ihrer Ruheposition P0 in weitere Positionen P bis P1 gebracht, wobei die Spitzen der Dorne 20 sich aufeinander zu bewegen und dabei jeweils auf konzentrischen Kreisen angeordnet sind. Dabei wird von der Sensorik 15, 14 ein Weg X und eine Kraft F gemessen, die von der Kraft/Weg-Kurve G dargestellt sind. Die Positionen P0, P, P1 entsprechen jeweils für den Verlauf der Kraft/Weg-Kurve G und deren Analyse zur Bewertung der Qualität einer Crimpung besonders charakteristischen Positionen P der Dorne 20 und korrespondieren dabei jeweils mit einem gemessenen Weg X des Sensors 15.

Fig. 5B zeigt eine vergrößerte Darstellung der Crimpeinrichtung 2 von Fig. 4A in der Ruheposition P0, zusammen mit einer bestimmungsgemäß zum Vercrimpen in der Crimpeinrichtung 2 angeordneten Kontakthülse 3 und einem Kabel 4. Die Spitzen der Dorne 20 der Crimpeinrichtung 2 sind dabei konzentrisch mit der Kontakthülse 3 und der zylindrischen Führung der Crimpeinrichtung 2 angeordnet.

Eine Verlagerung der Dorne 20 von der Position P0 zu der in Fig. 5A zu der Position P0 benachbarten Position P erfolgt dabei unter Einsatz einer konstanten Kraft F. Dementsprechend ist auch der Verlauf der Kraft/Weg-Kurve G in einem ersten Bereich P0-P zwischen der Position P0 und der Position P der Dorne 20 konstant, in der die Dorne 20 der Crimpeinrichtung 2 die Oberfläche der Kontakthülse 3 berühren.

Fig. 6B zeigt eine gegenüber Fig. 5B vergrößerte und detailliertere Darstellung eines Schnitts durch eine bestimmungsgemäß zur Crimpung mit einem Kabel 4 versehene Kontakthülse 3. Der Innenraum der Kontakthülse 30 weist neben Einzeldrähten 40 der Litze des Kabels 4 einen von den Einzeldrähten 40 der Litze nicht beanspruchten Hohlraum auf. Die Kontakthülse 3 ist unversehrt und ihr Zustand entspricht der Kontakthülse 3 von Fig. 5B in dem Bereich P0-P der Crimpung mit der Kraft/Weg-Kurve G.

Fig. 5C zeigt die Dorne 20 der Crimpeinrichtung 2 an der mit der Position P1 der Kraft/Weg-Kurve G korrespondierenden Position P1 der Dorne 20, wobei die Spitzen der Dorne 20 auf einem Kreis mit einem Durchmesser H angeordnet sind, der der eingestellten Crimphöhe H entspricht.

Mit den an der Position P1 angeordneten Dornen 20 füllt die Litze den in der Kontakthülse 3 zur Verfügung stehenden Raum vollständig aus.

Dieser Zustand der Kontakthülse 3 und der Litze ist in einem Schliffbild der Kontakthülse 3 für den Bereich P1 von Fig. 6C dargestellt, in dem keine Einzeldrähte 40 der Litze erkennbar sind und neben der Litze kein Hohlraum vorhanden ist. Fig. 6C zeigt dabei ein Schliffbild einer Crimpung mit einer wünschenswerten vorbestimmten Qualität, in dem keine Einzeldrähte 40 oder Risse in der Kontakthülse 3 aufgrund z.B. unerwünschter Materialmängel erkennbar sind.

Fig. 6A zeigt weitere Kraft/Weg-Kurven G, G3 und G4 einer Crimpung zusammen mit zwei Hüllkurven GH eines Referenzmodells, das zur Prüfung der Qualität einer Crimpung geeignet ist.

Die beiden Hüllkurven GH sind in Fig. 6A jeweils mit strichpunktierten Linien dargestellt und begrenzen einen Toleranzbereich T. Die Kraft/Weg-Kurve G von Fig. 6A ist mit einer durchgezogenen Linie dargestellt und liegt in ihrem gesamten Verlauf von der Position P0 bis zu der Position P1 der Dorne 20 zwischen den Hüllkurven GH und entspricht einer Crimpung einer korrekten Kontakthülse 3 mit einem korrekten Kabel 4 mit einer vorbestimmten wünschenswerten Qualität.

Die Kraft/Weg-Kurve G3 von Fig. 6A ist mit einer gestrichelten Linie dargestellt und verläuft nahezu vollständig oberhalb der beiden Hüllkurven GH. Die Kraft/Weg-Kurve G3 korrespondiert mit einer Crimpung einer zu großen Kontakthülse 3, die von den Dornen 20 einer Crimpeinheit 2 weit vor der für eine Berührung der Kontakthülse 3 vorgesehenen Position P1 berührt und elastisch verformt wird. Demzufolge liegt der Kraftverlauf F der Kraft/Weg-Kurve G3 bis zu der Position P2 weit oberhalb des Toleranzbereichs T.

Bei einer Crimpung mit einer Kraft/Weg-Kurve G3 kann auf einem Bildschirm einer Crimpvorrichtung 1 neben den Kurven G3 und GH auch die Information angezeigt werden, dass die Crimpung eine unerwünschte Qualität aufgrund einer fehlerhaft großen Kontakthülse 3 aufweist. Darüber hinaus kann aus dem Verlauf der Kraft/Weg-Kurve G3 mit einem eingangs beschriebenen Verfahren eine Wahrscheinlichkeit eines Vorliegens eines vorstehend genannten Fehlers berechnet und ebenfalls auf dem Bildschirm angezeigt werden.

Die Kraft/Weg-Kurve G4 von Fig. 6A ist ebenfalls mit einer gestrichelten Linie dargestellt und verläuft zunächst innerhalb des von den beiden Hüllkurven GH vorgegebenen Toleranzbereichs T. Anders als die Kraft/Weg-Kurve G3 korrespondiert die Kraft/Weg-Kurve G4 mit einer Crimpung einer korrekten Kontakthülse 3 und eines zu kleinen Kabels 4 mit einer zu kleinen Litze und/oder mit zu wenig Einzeldrähten 40. Aufgrund der zu kleinen Litze oder zu wenigen Einzeldrähten 40 liegt der Kraftverlauf F ab etwa der vorstehend unter Bezugnahme auf Fig. 2A beschriebenen Position P3 der Dorne 20 unterhalb eines korrekten Kraftverlaufs F und außerhalb des von den beiden Hüllkurven GH vorgegebenen Toleranzbereichs T.

Bei einer Crimpung mit einer Kraft/Weg-Kurve G4 kann auf einem Bildschirm einer Crimpvorrichtung 1 neben den Kurven G4 und GH auch die Information angezeigt werden, dass die Crimpung eine unerwünschte Qualität aufgrund eines fehlerhaft kleinen Kabels 4, dessen Litze zu wenig Einzeldrähte 40 aufweist. Darüber hinaus kann aus dem Verlauf der Kraft/Weg-Kurve G4 mit einem eingangs beschriebenen Verfahren eine Wahrscheinlichkeit eines Vorliegens eines vorstehend genannten Fehlers berechnet und ebenfalls auf dem Bildschirm angezeigt werden.

Bei dem vorstehend unter Bezugnahme auf Fig. 5A und 6A beschriebenen Verfahren zur Überprüfung der Qualität einer Crimpung, bei dem während des Crimpens eine Kraft/Weg-Kurve G, G3, G4 erfasst und auf einem Bildschirm angezeigt wird, und aus dem Verlauf der Kraft/Weg-Kurve G eine Aussage über die Qualität der Crimpung getroffen wird, kann zur Ermittlung des Toleranzbereichs T und insbesondere für eine Analyse der Kraft/Weg-Kurve G und insbesondere für eine Fehlerermittlung mittels dem Verfahren wie eingangs beschrieben vorteilhaft ein weiterer erster und/oder zweiter und/oder dritter und/oder vierter und/oder fünfter Parameter berücksichtigt werden.

Der erste und/oder zweite und/oder dritte und/oder vierte und/oder fünfte Parameter werden geeigneter Weise jeweils von dem beschriebenen ersten und/oder zweiten und/oder dritten Signal vorgegeben und/oder von der beschriebenen Programmierung der Auswertelektronik auf das vorbestimmte Kabel 4 und/oder die vorbestimmte Kontakthülse 3 vorgegeben. Bei Verwendung der vorstehenden Parameter kann eine besonders zuverlässige und genaue Analyse der Kraft/Weg-Kurve G insbesondere auch mit einer wünschenswerten Fehlerermittlung durchgeführt werden.

### Bezugszeichenliste

- 1: Crimpmaschine
- 10: Zylinder
- 11: Kolben
- 12: Einstellmechanik
- 120: Öffnung
- 13: Wendelfördereinrichtung
- 130: Zuführschiene
- 14: Kraftsensor
- 15: Wegsensor
- 150: Hebel
- 2: Crimpeinrichtung
- 20: Presselement, Dorn
- 3: Kontakthülse
- 31: innerer Rand
- 32: äußerer Rand
- 4: Kabel
- 40: Einzeldraht
- 41: innerer Rand Isolierung, äußerer Rand Litze
- 42: äußerer Rand Isolierung
- 5: Auswertelektronik
- 61, 62, 63: optischer Sensor, Kamera
- D31, D32, D41, D42: Durchmesser Ausschnitt
- A L: Länge
- F: Kraft
- T: Toleranzbereich
- X, X(n): Weg
- G, G3, G4, GH: Kurve
- H: Crimphöhe
- P0, P, P1: Position

## Patentansprüche

1. Verfahren zur Sicherstellung der Qualität einer Crimpung unter Verwendung einer Crimpmaschine (1) zur Crimpung eines Kabels (4) mit einer Kontakthülse (3), und
unter Verwendung eines ersten optischen Sensors (61) zur Erfassung und/oder Aufzeichnung von ersten Bilddaten der Kontakthülse (3), und unter Verwendung einer Auswertelektronik (5),
mit den Schritten:
die ersten Bilddaten der Kontakthülse (3) werden von dem ersten optischen Sensor (61) erfasst;
die Auswertelektronik (5) führt einen ersten Vergleich der ersten Bilddaten des ersten optischen Sensors (61) mit ersten Referenzdaten einer vorbestimmten Kontakthülse (3) durch, und
der erste Vergleich wird auf Vorliegen eines vorbestimmten ersten Kriteriums geprüft;
wenn das vorbestimmte erste Kriterium erfüllt ist, wird ein erstes Signal ausgegeben;
wobei die Erfassung der ersten Bilddaten und der erste Vergleich und die Prüfung des ersten Kriteriums und die Ausgabe des ersten Signals durchgeführt werden, bevor das Kabel (4) mit der Kontakthülse (3) vercrimpt wird;
**gekennzeichnet, durch:**
unter Verwendung eines zweiten optischen Sensors (62) zur Erfassung und Aufzeichnung von zweiten Bilddaten des Kabels (4), wobei das Verfahren die weiteren Schritte aufweist:
die zweiten Bilddaten des Kabels (4) werden von dem zweiten optischen Sensor (62) erfasst;
die Auswertelektronik (5) führt einen zweiten Vergleich der zweiten Bilddaten des zweiten optischen Sensors (62) mit zweiten Referenzdaten eines vorbestimmten Kabels (4) durch;
der zweite Vergleich wird auf Vorliegen eines vorbestimmten zweiten Kriteriums geprüft;
wenn das vorbestimmte zweite Kriterium erfüllt ist, wird ein zweites Signal ausgegeben;
wobei die Erfassung der zweiten Bilddaten und der zweite Vergleich und die Prüfung des zweiten Kriteriums und die Ausgabe des zweiten Signals durchgeführt werden, bevor das Kabel (4) mit der Kontakthülse (3) vercrimpt wird; wobei außerdem ein Vergleich der ersten und zweiten Bilddaten durchgeführt wird; wobei
die von dem ersten optischen Sensor (61) erfassten ersten Bilddaten eines äußeren Rands (32) und eines inneren
Rands (31) der Kontakthülse (3) sind, wobei der innere Rand eine in
die Kontakthülse (3) eingeführte Ader des Kabels (4) umgibt, und
wobei
von dem zweiten optischen Sensor (62) Bilddaten eines inneren Rands (41) einer Isolierung des Kabels (4) und/oder eines äußeren Rands (41) einer Litze des einadrigen Kabels (4) erfasst werden, und wobei der Vergleich der ersten und zweiten Bilddaten auf Vorliegen eines vorbestimmten weiteren Kriteriums geprüft wird, um zu prüfen,
ob das zur Crimpung vorgesehene Kabel (4) zu der zur Crimpung vorgesehenen Kontakthülse (3) passt, und wobei wenn das weitere Kriterium erfüllt ist, ein weiteres Signal ausgegeben wird.

2. Verfahren nach Anspruch 1, wobei:
das Verfahren zur Sicherstellung der Qualität einer Crimpung eines Kabels (4) mit einer gedrehten Kontakthülse (3) verwendet wird, und wobei aus den ersten Bilddaten ein Durchmesser (D31) des inneren Rands (31) der Kontakthülse (3) ermittelt wird, und aus den zweiten Bilddaten ein Durchmesser (D41) der Litze des Kabels (4) ermittelt wird, und wobei der Durchmesser (D31) und ein mit ihm korrespondierender Querschnitt der Kontakthülse (3) mit dem Durchmesser (D41) und einem mit ihm korrespondierenden Querschnitt der Litze des Kabels (4) verglichen werden.

3. Verfahren nach Anspruch 2, wobei das weitere Kriterium eine vorbestimmte Abweichnung des Durchmessers (D31) des inneren Rands (31) der Kontakthülse von dem Durchmesser (D41) der Litze des Kabels (4) ist. das

4. Verfahren nach einem der Ansprüche 1 bis 3, unter Verwendung wenigstens eines dritten optischen Sensors (63) zur Erfassung und/oder Aufzeichnung von dritten Bilddaten der Kontakthülse (3) und des Kabels (4), mit den Schritten:
die dritten Bilddaten der Kontakthülse (3) und des Kabels (4) werden von dem wenigstens einen dritten optischen Sensor (63) erfasst;
die Auswertelektronik (5) führt einen dritten Vergleich der dritten Bilddaten des dritten optischen Sensors (63) mit dritten Referenzdaten durch;
der dritte Vergleich wird auf Vorliegen eines vorbestimmten dritten Kriteriums geprüft;
wenn das vorbestimmte dritte Kriterium erfüllt ist, wird ein drittes Signal ausgegeben; und
wobei die Erfassung der dritten Bilddaten und der dritte Vergleich und die Prüfung des dritten Kriteriums und die Ausgabe des dritten Signals durchgeführt werden, nachdem das Kabel (4) mit der Kontakthülse (3) vercrimpt ist.

5. Verfahren nach Anspruch 4, wobei von dem wenigstens einen dritten optischen Sensor (63) längsseitige Bilddaten wenigstens einer Seitenansicht des mit der Kontakthülse (3) vercrimpten Kabels (4) erfasst werden, wobei die dritten Bilddaten ein Einzelbild und/oder eine Videosequenz sein können.

6. Verfahren nach einem der Ansprüche 1 bis 5, wobei
der erste optische Sensor (61) und/oder der zweite optische Sensor (62) mittels einer ersten und/oder zweiten Kamera bereitgestellt wird; und
der wenigstens eine dritte optische Sensor (63) mittels wenigstens einer dritten Kamera bereitgestellt wird und/oder mittels einem Laserscanner bereitgestellt wird.

7. Verfahren nach einem der Ansprüche 1 bis 6, mit den Schritten:
Auswahl eines vorbestimmten Kabels (4) und einer vorbestimmten Kontakthülse (3) für eine vorbestimmte Crimpung;
Einstellung einer vorbestimmten geeigneten Crimphöhe (H);
Einstellung einer vorbestimmten geeigneten Abisolierung des Kabels (4);
Programmierung der Auswertelektronik (5) auf das vorbestimmte Kabel (4) und die vorbestimmte Kontakthülse (3), wobei erste und/oder zweite und/oder dritte Referenzdaten von der Auswertelektronik aus einer Vielzahl von vorbestimmten ersten und/oder vorbestimmten zweiten und/oder vorbestimmten dritten Referenzdaten ausgewählt werden;
Durchführung der Schritte des Verfahrens nach einem der Ansprüche 1 bis 6.

8. Verfahren nach einem der Ansprüche 1 bis 7, wobei
das erste und/oder zweite und/oder dritte Signal einen Ruhezustand und/oder Standby Modus und/oder Betriebsmodus der Crimpmaschine auslöst; und/oder
die ersten und/oder zweiten und/oder dritten Bilddaten auf einem Bildschirm angezeigt werden.

9. Verfahren nach einem der Ansprüche 1 bis 8, wobei
das erste und/oder zweite und/oder dritte Signal einen ersten und/oder zweiten und/oder dritten Parameter umfassen; und/oder
die Programmierung der Auswertelektronik (5) auf das vorbestimmte Kabel (4) und die vorbestimmte Kontakthülse (3) einen vierten und fünften Parameter umfasst; wobei
der erste und/oder zweite und/oder dritte und/oder vierte und/oder fünfte Parameter von der Auswertelektronik (5) bei einem Verfahren zur Überprüfung der Qualität einer Crimpung des Kabels (4) mit der Kontakthülse (3) unter Verwendung einer Sensorik (15, 14) zur Messung einer Kraft (F) und eines Wegs (X) einer Einrichtung zur Betätigung und/oder Druckbeaufschlagung einer Crimpeinheit (2) und der Auswertelektronik (5) berücksichtigt wird, wobei
während des Crimpens eine Kraft/Weg-Kurve (G, G3, G4) erfasst und auf einem Bildschirm angezeigt wird, und aus dem Verlauf der Kraft/Weg-Kurve (G, G3, G4) eine Aussage über die Qualität der Crimpung getroffen wird.

10. Verfahren nach einem der Ansprüche 1 bis 9, wobei das
Verfahren zur Sicherstellung und/oder Überprüfung der Qualität einer Crimpung eines Kabels (4) mit einer gedrehten Kontakthülse (3) mittels einer Indent-Crimpeinrichtung und vorzugsweise einer Zweidorn-Crimpeinrichtung und besonders bevorzugt einer Vierdorn-Crimpeinrichtung verwendet wird.

11. Crimpmaschine (1) mit einer Wendelfördereinrichtung (13) zur
Zuführung einer Vielzahl von zur Crimpung mit einem Kabel (4) vorgesehenen Kontakthülsen (3), wobei die
Wendelfördereinrichtung (13) eine Zuführschiene (130) aufweist, mittels der die Kontakthülsen (3) der Crimpmaschine (1) in einer vorbestimmten Orientierung zugeführt werden, und wobei ein erster optischer Sensor (61) zur Erfassung von ersten Bilddaten einer Kontakthülse (3) an der Zuführschiene (130) vorgesehen ist; und
ein zweiter optischer Sensor (62) zur Erfassung von zweiten Bilddaten eines Kabels (4) vorgesehen ist, wobei
die Crimpmaschine (1) eine Abisoliereinrichtung zur Abisolierung des zur Crimpung mit der Kontakthülse (3) vorgesehenen Kabels (4) und eine Öffnung (120) zur manuellen Zuführung des Kabels (4) zur Abisolierung und anschließenden Crimpung des Kabels (4), aufweist, wobei der zweite optische Sensor (62) an der Öffnung (120) vorgesehen ist; und wobei
an der Öffnung wenigstens ein dritter optischer Sensor (63) zur Erfassung von dritten Bilddaten eines mit einer Kontakthülse (3) vercrimpten Kabels (4) vorgesehen sein kann und wobei die Crimpmaschine (1) zur Durchführung des Verfahrens nach einem der Ansprüche 1 bis 10 geeignet ausgebildet ist.

12. Crimpmaschine (1) nach Anspruch 11, wobei die Crimpmaschine (1) eine Crimpeinrichtung (2) aufweist; wobei die Crimpeinrichtung (2) eine Indent-Crimpeinrichtung und vorzugsweise eine Zweidorn-Crimpeinrichtung und besonders bevorzugt einen Vierdorn-Crimpeinrichtung ist, und die Kontakthülse (3) eine gedrehte Kontakthülse (3) ist.

## Claims

1. Method for ensuring the quality of a crimp using a crimping machine (1) for crimping of a cable (4) with a contact sleeve (3), and
using a first optical sensor (61) for acquiring and/or recording first image data of the contact sleeve (3), and using evaluation electronics (5),
comprising the following steps:
the first image data of the contact sleeve (3) are acquired by the first optical sensor (61);
the evaluation electronics (5) carry out a first comparison of the first image data from the first optical sensor (61) with first reference data for a predetermined contact sleeve (3), and
the first comparison is checked for the presence of a predetermined first criterion;
if the predetermined first criterion is satisfied, a first signal is output;
wherein the acquisition of the first image data and the first comparison and the checking of the first criterion and the output of the first signal are carried out before the cable (4) is crimped with the contact sleeve (3);
**characterized by**:
using a second optical sensor (62) for acquiring and recording second image data of the cable (4), the method comprising the following further steps:
the second image data of the cable (4) are acquired by the second optical sensor (62);
the evaluation electronics (5) carry out a second comparison of the second image data from the second optical sensor (62) with second reference data for a predetermined cable (4);
the second comparison is checked for the presence of a predetermined second criterion;
if the predetermined second criterion is satisfied, a second signal is output;
wherein the acquisition of the second image data and the second comparison and the checking of the second criterion and the output of the second signal are carried out before the cable (4) is crimped with the contact sleeve (3); wherein
a comparison of the first and second image data is also carried out; wherein
the first image data, acquired by the first optical sensor (61), are image data of an outer edge (32) and an inner edge (31) of the contact sleeve (3), the inner edge surrounding a core of the cable (4) that has been inserted into the contact sleeve (3), and wherein image data of an inner edge (41) of an insulation of the cable (4) and/or an outer edge (41) of a strand of the single-core cable (4) are acquired by the second optical sensor (62), and wherein the comparison of the first and second image data is checked for the presence of a predetermined further criterion in order to check whether the cable provided for crimping (4) matches the contact sleeve provided for crimping (3), and wherein, when the further criterion is satisfied, a further signal is output.

2. Method according to Claim 1, wherein:
the method is used to ensure the quality of a crimp of a cable (4) with a turned contact sleeve (3), and wherein a diameter (D31) of the inner edge (31) of the contact sleeve (3) is ascertained from the first image data, and a diameter (D41) of the strand of the cable (4) is ascertained from the second image data, and wherein
the diameter (D31) and a corresponding cross section of the contact sleeve (3) are compared with the diameter (D41) and a corresponding cross section of the strand of the cable (4).

3. Method according to Claim 2, wherein the further criterion is a predetermined deviation of the diameter (D31) of the inner edge (31) of the contact sleeve from the diameter (D41) of the strand of the cable (4).

4. Method according to one of Claims 1 to 3, using at least one third optical sensor (63) for acquiring and/or recording third image data of the contact sleeve (3) and of the cable (4), comprising the following steps:
the third image data of the contact sleeve (3) and of the cable (4) are acquired by the at least one third optical sensor (63);
the evaluation electronics (5) carry out a third comparison of the third image data from the third optical sensor (63) with third reference data;
the third comparison is checked for the presence of a predetermined third criterion;
if the predetermined third criterion is satisfied, a third signal is output;
and
wherein the acquisition of the third image data and the third comparison and the checking of the third criterion and the output of the third signal are carried out after the cable (4) has been crimped with the contact sleeve (3).

5. Method according to Claim 4, wherein longitudinal image data of at least one side view of the cable (4) crimped with the contact sleeve (3) are acquired by the at least one third optical sensor (63), wherein the third image data can be a single image and/or a video sequence.

6. Method according to one of Claims 1 to 5, wherein the first optical sensor (61) and/or the second optical sensor (62) is provided by means of a first and/or second camera; and
the at least one third optical sensor (63) is provided by means of at least one third camera and/or is provided by means of a laser scanner.

7. Method according to one of Claims 1 to 6, comprising the following steps:
selecting a predetermined cable (4) and a predetermined contact sleeve (3) for a predetermined crimping;
setting a predetermined suitable crimp height (H); setting a predetermined suitable stripping of the cable (4);
programming the evaluation electronics (5) for the predetermined cable (4) and the predetermined contact sleeve (3), wherein the evaluation electronics select first and/or second and/or third reference data from a large quantity of predetermined first and/or predetermined second and/or predetermined third reference data;
carrying out the steps of the method according to one of Claims 1 to 6.

8. Method according to one of Claims 1 to 7, wherein
the first and/or second and/or third signal triggers an idle state and/or standby mode and/or operating mode of the crimping machine; and/or
the first and/or second and/or third image data are displayed on a screen.

9. Method according to one of Claims 1 to 8, wherein
the first and/or second and/or third signal comprises a first and/or a second and/or a third parameter; and/or the programming of the evaluation electronics (5) for the predetermined cable (4) and the predetermined contact sleeve (3) comprises a fourth and a fifth parameter;
wherein
the evaluation electronics (5) takes into account the first and/or the second and/or the third and/or the fourth and/or the fifth parameter in a method for checking the quality of a crimp of the cable (4) with the contact sleeve (3), using a sensor system (15, 14) for measuring a force (F) and a displacement (X) of a device for actuating and/or applying pressure to a crimping unit (2) and of the evaluation electronics (5), wherein, during the crimping, a force/displacement curve (G, G3, G4) is acquired and displayed on a screen, and a conclusion as to the quality of the crimping is reached from the profile of the force/displacement curve (G, G3, G4).

10. Method according to one of Claims 1 to 9, wherein the method is used to ensure and/or check the quality of a crimping of a cable (4) with a turned contact sleeve (3) by means of an indent crimping device and preferably a two-indent crimping device and particularly preferably a four-indent crimping device.

11. Crimping machine (1) with a spiral conveyor (13) for feeding a plurality of contact sleeves (3) provided for crimping with a cable (4), wherein the spiral conveyor (13) has a feed rail (130), by means of which the contact sleeves (3) are fed to the crimping machine (1) in a predetermined orientation, and wherein
a first optical sensor (61) is provided for acquiring first image data of a contact sleeve (3) on the feed rail (130); and
a second optical sensor (62) is provided for acquiring second image data of a cable (4), wherein
the crimping machine (1) has a stripping device for stripping the cable (4) provided for crimping with the contact sleeve (3) and an opening (120) for manually feeding the cable (4) for stripping and subsequent crimping of the cable (4), wherein the second optical sensor (62) is provided at the opening (120); and wherein at least one third optical sensor (63) for acquiring third image data of a cable (4) crimped with a contact sleeve (3) can be provided at the opening, and wherein the crimping machine (1) is suitably designed for carrying out the method according to one of Claims 1 to 10.

12. Crimping machine (1) according to Claim 11, wherein
the crimping machine (1) has a crimping device (2);
wherein
the crimping device (2) is an indent-crimping device, preferably a two-indent crimping device and particularly preferably a four-indent crimping device, and the contact sleeve (3) is a turned contact sleeve (3).

## Revendications

1. Procédé pour la garantie de la qualité d'un sertissage par l'utilisation d'une machine de sertissage (1) pour le sertissage d'un câble (4) avec une douille de contact (3), et
par l'utilisation d'un premier capteur optique (61) pour l'acquisition et/ou l'enregistrement de premières données d'image de la douille de contact (3) et par l'utilisation d'une électronique d'évaluation (5), comprenant les étapes suivantes :
les premières données d'image de la douille de contact (3) sont acquises par le premier capteur optique (61) ;
l'électronique d'évaluation (5) effectue une première comparaison des premières données d'image du premier capteur optique (61) avec des premières données de référence d'une douille de contact (3) prédéterminée, et
la première comparaison est contrôlée quant à l'existence d'un premier critère prédéterminé ;
si le premier critère prédéterminé est satisfait, un premier signal est émis ;
dans lequel l'acquisition des premières données d'image et la première comparaison et le contrôle du premier critère et l'émission du premier signal sont effectués avant que le câble (4) ne soit serti avec la douille de contact (3) ;
**caractérisé par** :
l'utilisation d'un deuxième capteur optique (62) pour l'acquisition et l'enregistrement de deuxièmes données d'image du câble (4), le procédé comportant les étapes suivantes :
les deuxièmes données d'image du câble (4) sont acquises par le deuxième capteur optique (62) ;
l'électronique d'évaluation (5) effectue une deuxième comparaison des deuxièmes données d'image du deuxième capteur optique (62) avec des deuxièmes données de référence d'un câble (4) prédéterminé ;
la deuxième comparaison est contrôlée quant à l'existence d'un deuxième critère prédéterminé ;
si le deuxième critère prédéterminé est satisfait, un deuxième signal est émis ;
dans lequel l'acquisition des deuxièmes données d'image et la deuxième comparaison et le contrôle du deuxième critère et l'émission du deuxième signal sont effectués avant que le câble (4) ne soit serti avec la douille de contact (3) ;
une comparaison des premières et deuxièmes données d'image est en outre effectuée ; dans lequel
les premières données d'image acquises par le premier capteur optique (61) sont celles d'un bord extérieur (32) et d'un bord intérieur (31) de la douille de contact (3), dans lequel le bord intérieur entoure un conducteur du câble (4) introduit dans la douille de contact (3), et dans lequel le deuxième capteur optique (62) acquiert des données d'image d'un bord intérieur (41) d'un isolant du câble (4) et/ou d'un bord extérieur (41) d'un câble unifilaire (4), et dans lequel la comparaison des premières et deuxièmes données d'image est contrôlée quant à l'existence d'un critère supplémentaire prédéterminé afin de contrôler si le câble (4) prévu pour le sertissage correspond à la douille de contact (3) prévue pour le sertissage, et dans lequel, si le critère supplémentaire est satisfait, un autre signal est émis.

2. Procédé selon la revendication 1, dans lequel :
le procédé est utilisé pour la garantie de la qualité d'un sertissage d'un câble (4) avec une douille de contact tournée (3), et dans lequel
à partir des premières données d'image, un diamètre (D31) du bord intérieur (31) de la douille de contact (3) est déterminé, et à partir des deuxièmes données d'image, un diamètre (D41) du toron du câble (4) est déterminé, et dans lequel
le diamètre (D31) et une section transversale qui lui correspond de la douille de contact (3) sont comparés au diamètre (D41) et à une section transversale qui lui correspond du toron du câble (4).

3. Procédé selon la revendication 2, dans lequel le critère supplémentaire est un écart prédéterminé du diamètre (D31) du bord intérieur (31) de la douille de contact par rapport au diamètre (D41) du câble (4).

4. Procédé selon l'une quelconque des revendications 1 à 3, utilisant au moins un troisième capteur optique (63) pour l'acquisition et/ou l'enregistrement de troisièmes données d'image de la douille de contact (3) et du câble (4), comprenant les étapes suivantes :
les troisièmes données d'image de la douille de contact (3) et du câble (4) sont acquises par ledit au moins un troisième capteur optique (63) ;
l'électronique d'évaluation (5) effectue une troisième comparaison des données d'image du troisième capteur optique (63) avec des troisièmes données de référence ;
la troisième comparaison est contrôlée quant à l'existence d'un troisième critère prédéterminé ;
si le troisième critère prédéterminé est satisfait, un troisième signal est émis ;
et
dans lequel l'acquisition des troisièmes données d'image et la troisième comparaison et le contrôle du troisième critère et l'émission du troisième signal sont effectués après que le câble (4) a été serti avec la douille de contact (3).

5. Procédé selon la revendication 4, dans lequel ledit au moins un troisième capteur optique (63) acquiert des données d'image longitudinales d'au moins une vue latérale du câble (4) serti avec la douille de contact (3), les troisièmes données d'image pouvant être une image unique et/ou une séquence vidéo.

6. Procédé selon l'une quelconque des revendications 1 à 5, dans lequel
le premier capteur optique (61) et/ou le deuxième capteur optique (62) sont fournis au moyen d'une première et/ou d'une deuxième caméra ; et
ledit au moins un troisième capteur optique (63) est fourni au moyen d'au moins une troisième caméra et/ou d'un scanner laser.

7. Procédé selon l'une quelconque des revendications 1 à 6, comprenant les étapes suivantes :
sélection d'un câble (4) prédéterminé et d'une douille de contact (3) prédéterminée pour un sertissage prédéterminé ;
réglage d'une hauteur de sertissage appropriée prédéterminée (H) ;
réglage d'une longueur de dénudage appropriée prédéterminée du câble (4) ;
programmation de l'électronique d'évaluation (5) sur le câble (4) prédéterminé et la douille de contact (3) prédéterminée, dans lequel les premières et/ou deuxièmes et/ou troisièmes données de référence sont sélectionnées par l'électronique d'évaluation parmi une pluralité de premières et/ou de deuxièmes et/ou de troisièmes données de référence prédéterminées ;
exécution des étapes du procédé selon l'une quelconque des revendications 1 à 6.

8. Procédé selon l'une quelconque des revendications 1 à 7, dans lequel
le premier et/ou le deuxième et/ou le troisième signal déclenche un état de veille et/ou un mode de fonctionnement de la machine de sertissage ; et/ou les premières et/ou deuxièmes et/ou troisièmes données d'image sont affichées sur un écran.

9. Procédé selon l'une quelconque des revendications 1 à 8, dans lequel
le premier et/ou le deuxième et/ou le troisième signal comprend/comprennent un premier et/ou un deuxième et/ou un troisième paramètre ; et/ou
la programmation de l'électronique d'évaluation (5) sur le câble (4) prédéterminé et la douille de contact (3) prédéterminée comprend un quatrième et un cinquième paramètre ; dans lequel
le premier et/ou le deuxième et/ou le troisième et/ou le quatrième et/ou le cinquième paramètre est/sont pris en compte par l'électronique d'évaluation (5) lors d'un procédé de vérification de la qualité d'un sertissage du câble (4) avec la douille de contact (3) par l'utilisation de capteurs (15, 14) destinés à mesurer une force (F) et un déplacement (X) d'un dispositif d'actionnement et/ou de mise sous pression d'une unité de sertissage (2) et de l'électronique d'évaluation (5), dans lequel
pendant le sertissage, une courbe force/déplacement (G, G3, G4) est acquise et affichée sur un écran, et une conclusion concernant la qualité du sertissage est tirée à partir du tracé de la courbe force/déplacement (G, G3, G4).

10. Procédé selon l'une quelconque des revendications 1 à 9, le procédé étant utilisé pour la garantie et/ou la vérification de la qualité du sertissage d'un câble (4) avec une douille de contact (3) tournée, au moyen d'un dispositif de sertissage par indentation et de préférence d'un dispositif de sertissage à deux poinçons, et de manière particulièrement préférée, d'un dispositif de sertissage à quatre poinçons.

11. Machine de sertissage (1) comprenant un dispositif convoyeur hélicoïdal (13) permettant d'acheminer une pluralité de douilles de contact (3) destinées au sertissage avec un câble (130), dans laquelle le dispositif convoyeur hélicoïdal (13) comporte un rail d'alimentation (4), au moyen duquel les douilles de contact (3) sont acheminées vers la machine de sertissage (1) dans une orientation prédéterminée, et dans laquelle un premier capteur optique (61) est prévu pour l'acquisition de premières données d'image d'une douille de contact (3) sur le rail d'alimentation (130) ; et
un deuxième capteur optique (62) est prévu pour l'acquisition de deuxièmes données d'image d'un câble (4),
la machine de sertissage (1) comportant un dispositif de dénudage pour le dénudage du câble (4), prévu pour le sertissage avec la douille de contact (3), et une ouverture (120) pour l'acheminement manuel du câble (4) pour le dénudage et le sertissage subséquent du câble (4), le deuxième capteur optique (62) étant prévu au niveau de l'ouverture (120) ; et dans laquelle au moins un troisième capteur optique (63) peut être prévu au niveau de l'ouverture pour l'acquisition de troisièmes données d'image d'un câble (4) serti avec une douille de contact (3), et la machine de sertissage (1) étant conçue pour la mise en œuvre du procédé selon l'une quelconque des revendications 1 à 10.

12. Machine de sertissage (1) selon la revendication 11, la machine de sertissage (1) comportant un dispositif de sertissage (2) ; dans laquelle
le dispositif de sertissage (2) est un dispositif de sertissage par indentation, et de préférence un dispositif de sertissage à deux poinçons, et de manière particulièrement préférée, un dispositif de sertissage à quatre poinçons, et la douille de contact (3) est une douille de contact (3) tournée.
